# EUROPEAN PATENT SPECIFICATION

(11) **EP 1 657 412 B1**
(45) Date of publication and mention of the grant of the patent: **18.07.2007**
(21) Application number: 05024905.1
(22) Date of filing: 15.11.2005
(51) Int. Cl.: F01N 3/20, F01N 3/08, B01D 53/94

(54) **Exhaust gas purification system of internal combustion engine**
Abgasreinigungssystem für eine Brennkraftmaschine
Système de purification des gaz d'échappement pour un moteur à combustion interne

(30) Priority: 15.11.2004 JP 2004330597
(43) Date of publication of application: 17.05.2006
(73) Proprietor: Toyota Jidosha Kabushiki Kaisha, Toyota-shi, Aichi-ken, 471-8571 (JP)
(72) Inventor: Toshioka, Shunsuke, Toyota-shi Aichi-ken 471-8571 (JP)
(74) Representative: TBK-Patent

(56) References cited:
- US-A- 5 406 790
- US-A- 5 657 625
- PATENT ABSTRACTS OF JAPAN vol. 1995, no. 07, 31 August 1995 (1995-08-31) & JP 07 102956 A (TOYOTA MOTOR CORP), 18 April 1995 (1995-04-18)

## Description

### BACKGROUND OF THE INVENTION

### 1. Field of the Invention

The present invention relates to an exhaust gas purification system of an internal combustion engine.

### 2. Description of the Related Art

An exhaust gas from an internal combustion engine normally contains noxious NOx etc. Therefore, an exhaust system of the internal combustion engine is provided with a NOx catalyst for purifying the exhaust gas from NOx. Herein, for example, in the case of an occlusion reduction type NOx catalyst, if a quantity of NOx occluded increases, purifying performance declines. A contrivance in this respect is that a fuel serving as a reducing agent is supplied to the occlusion reduction type NOx catalyst, and NOx occluded in this catalyst is reduction-released (which will hereinafter be termed [a NOx reduction treatment]). Further, it is known that SOx contained in the exhaust gas is occluded in the occlusion reduction type NOx catalyst, resulting in occurrence of so-called SOx poisoning that deteriorates the purifying performance, and there is also a case of supplying the fuel as the reducing agent to the occlusion reduction type NOx catalyst in order to obviate this SOx poisoning (which will hereinafter be referred to as [a SOX poisoning recovery treatment]).

Herein, when supplying the fuel as the reducing agent to the occlusion reduction type NOx catalyst described above and if an exhaust flow rate of the exhaust gas introduced into the occlusion reduction type NOx catalyst is improper, part of the supplied fuel might not be used for oxidation reaction in the occlusion reduction type NOx catalyst. If so, there might be a case, wherein neither the NOx reduction treatment nor the S0x recovery treatment is sufficiently conducted, and fuel consumption declines.

In this connection, a technology is proposed, wherein when a quantity of NOx accumulated in the NOx catalyst should be decreased, the quantity of the exhaust gas flowing through the NOx catalyst is decreased, and the reducing agent is supplied when just a predetermined period of passage time elapses. Moreover, as disclosed in Japanese Patent Application Laid-Open Publication No. 2004-52603, there is proposed a technology for acquiring a high purifying rate by correcting the passage time so that a peak value occurred in the oxygen concentration becomes coincident with a target value, wherein when the reducing agent is supplied, an oxygen concentration sensor detects a concentration of oxygen contained in the exhaust gas discharged from the NOx catalyst. Other related technologies are disclosed in Japanese Patent Application Publication No.2947021 (JP7102956) Japanese Patent Application Laid-Open Publication No. 2003-106142, Japanese Patent Application Laid-Open Publication No. 06-200738, and so forth.

Also in the description given above, however, there is low dispersibility of the added fuel into the NOx catalyst, and it is considered that the added fuel disperses one-sidedly in one portion of the NOx catalyst. This tendency becomes more conspicuous in a case where the NOx catalyst itself is elongate in its length and in a case where plural NOx catalysts are disposed in series. Then, in such cases, even when controlling an addition timing based on only a state quantity of the exhaust gas existing downstream of the NOx catalyst, there is a limit in terms of improving the dispersibility of the added fuel within the NOx catalyst, and there remains a room for improvement in order to sufficiently execute the NOx reduction treatment over the whole of the NOx catalyst.

### SUMMARY OF THE INVENTION

It is an object of the present invention to provide, in an exhaust gas purification system of an internal combustion engine that reduces NOx occluded in a NOx catalyst by decreasing a quantity of an exhaust gas flowing through an occlusion reduction type NOx catalyst and supplying a reducing agent to the NOx catalyst, a technology capable improving dispersibility of the reducing agent into the NOx catalyst.

To accomplish the above object, according to the present invention, exhaust quantity adjusting means are disposed upstream and downstream of an occlusion reduction type NOx catalyst. Then, in a state where the exhaust quantity adjusting means disposed downstream decreases the quantity of the exhaust gas flowing through downstream of the occlusion reduction type NOx catalyst and an reducing agent added from reducing agent adding means exists in the occlusion reduction type NOx catalyst, the exhaust quantity adjusting means disposed on the upstream side changes a quantity of the exhaust gas flowing through upstream of the occlusion reduction type NOx catalyst. Then, the reducing agent existing within the occlusion reduction type NOx catalyst is further dispersed by dint of an exhaust gas flow, occurred on that occasion, in the occlusion reduction type NOx catalyst.

More particularly, an exhaust gas purification system of an internal combustion engine comprises:
an occlusion reduction type NOx catalyst disposed on an exhaust path of an internal combustion engine, purifying NOx in the exhaust gas, and recovering a NOx purifying capacity by a NOx reduction treatment;
reducing agent adding means disposed on an upstream side of the occlusion reduction type NOx catalyst on the exhaust path and adding a reducing agent into the exhaust gas;
upstream-side exhaust quantity adjusting means disposed upstream of the reducing agent adding means on the exhaust path, and adjusting a quantity of the exhaust gas flowing through upstream of the occlusion reduction type NOx catalyst; and
downstream-side exhaust quantity adjusting means disposed downstream of the occlusion reduction type NOx catalyst on the exhaust path, and adjusting a quantity of the exhaust gas flowing through downstream of the occlusion reduction type NOx catalyst,
wherein when executing the NOx reduction treatment of the occlusion reduction type NOx catalyst, at least the downstream-side exhaust quantity adjusting means decreases the quantity of the exhaust gas flowing through downstream of the occlusion reduction type NOx catalyst, and the reducing agent adding means adds the reducing agent into the exhaust gas, and
in a state where the quantity of the exhaust gas flowing through downstream of the occlusion reduction type NOx catalyst is decreased and the reducing agent added from the reducing agent adding means exists within the occlusion reduction type NOx catalyst, the upstream-side exhaust quantity adjusting means changes the quantity of the exhaust gas flowing through upstream of the occlusion reduction type NOx catalyst.

Considered herein is such a case that, as described above, the upstream-side exhaust quantity adjusting means and the downstream-side exhaust quantity adjusting means are disposed upstream and downstream of the occlusion reduction type NOx catalyst; the quantity of the exhaust gas flowing through the NOx catalyst is decreased, and the reducing agent is added into the exhaust gas, thus executing the NOx reduction treatment of the NOx catalyst. In this case, the quantity of the exhaust gas flowing through the NOx catalyst decreases with the operations of the upstream-side exhaust quantity adjusting means and the downstream-side exhaust quantity adjusting means. Then, during a period for which the quantity of the exhaust gas flowing through the NOx catalyst is kept decreasing, the reducing agent added into the exhaust gas by the reducing agent adding means disperses into the NOx catalyst, thereby reducing the NOx in the vicinity of the dispersing position.

If the reducing agent added from the reducing agent adding means does not uniformly disperse into the NOx catalyst during the period for which the quantity of the exhaust gas flowing through the NOx catalyst is kept decreasing, however, it is difficult to sufficiently reduce the NOx in the whole of the NOx catalyst.

Such being the case, according to the present invention, in a state where the quantity of the exhaust gas flowing through downstream of the NOx catalyst is decreased and the reducing agent added from the reducing agent adding means exists within the NOx catalyst, the upstream-side exhaust quantity adjusting means changes the quantity of the exhaust gas flowing through upstream of the NOx catalyst. With this operation, a flow state of the exhaust gas in the NOx catalyst is changed, and the reducing agent dispersing one-sidedly in the NOx catalyst is dispersed more uniformly within the NOx catalyst.

Herein, the upstream-side exhaust quantity adjusting means and the downstream-side exhaust quantity adjusting means can be exemplified by mechanisms such as valves and shutters disposed upstream and downstream of the NOx catalyst. Further, in the case of decreasing the quantity of the flow-through exhaust gas, within a possible range of the upstream-side exhaust quantity adjusting means and the downstream-side exhaust quantity adjusting means, the quantity of the exhaust gas flowing through upstream or downstream of the NOx catalyst may be minimized. This implies that, for example, if the upstream-side exhaust quantity adjusting means and the downstream-side exhaust quantity adjusting means are the valves disposed upstream and downstream of the NOx catalyst, the valves are set in a full-close state.

Further, herein, in the state where the quantity of the exhaust gas flowing through downstream of the NOx catalyst is decreased and the reducing agent added from the reducing agent adding means exists within the NOx catalyst, the upstream-side exhaust quantity adjusting means changes the quantity of the exhaust gas flowing through upstream of the NOx catalyst, which implies, for instance, the following.

A first example is that at a start timing of the NOx reduction treatment, to begin with, after the downstream-side exhaust quantity adjusting means has decreased the quantity of the exhaust gas flowing through downstream of the NOx catalyst down to substantially the minimum, the reducing agent is added into the exhaust gas from the reducing agent adding means, and thereafter the upstream-side exhaust quantity adjusting means decreases the quantity of the exhaust gas flowing through upstream of the NOx catalyst.

Further, a second example is that at the start timing of the NOx reduction treatment, the quantity of the exhaust gas flowing through the NOx catalyst is decreased by simultaneously operating the upstream-side exhaust quantity adjusting means and the downstream-side exhaust quantity adjusting means, and the reducing agent is added into the exhaust gas by the reducing agent adding means, and, in the course of the NOx reduction treatment, the reducing agent is dispersed into the NOx catalyst, in which state the upstream-side exhaust quantity adjusting means increases the quantity of the exhaust gas flowing through upstream of the NOx catalyst.

As in the first example, the control is done such that at the start timing of the NOx reduction treatment, to begin with, after the downstream-side exhaust quantity adjusting means has decreased the quantity of the exhaust gas flowing through downstream of the NOx catalyst down to substantially the minimum, the reducing agent is added into the exhaust gas from the reducing agent adding means, and thereafter the upstream-side exhaust quantity adjusting means decreases the quantity of the exhaust gas flowing through upstream of the NOx catalyst. In the case of performing this control, the following operations and effects can be acquired.

Namely, as a concomitant of the operation that the downstream-side exhaust quantity adjusting means decreases the quantity of the exhaust gas flowing through downstream of the NOx catalyst down to substantially the minimum, the quantity of the exhaust gas flowing through within the NOx catalyst gradually decreases. Then, attributed to not only this factor but also a factor of the exhaust gas being blocked by the downstream-side exhaust quantity adjusting means on the downstream side of the NOx catalyst, a flow.state of the exhaust gas in the NOx catalyst changes. Specifically, a backflow of the exhaust gas blocked downstream of the NOx catalyst and a flow of the exhaust gas flowing in from the upstream side of the NOx catalyst, cause turbulence of the flow of the exhaust gas in the NOx catalyst.

On this occasion, the reducing agent added into the exhaust gas by the reducing agent adding means, as the quantity of the exhaust gas flowing through within the NOx catalyst decreases, decelerates its migration speed and substantially stops within the NOx catalyst, and besides, this reducing agent further disperses due to the change in the state of the air flow described above and spreads within the NOx catalyst, thereby dispersing more uniformly. Then, thereafter, the upstream-side exhaust quantity adjusting means substantially minimizes the quantity of the exhaust gas flowing through upstream of the NOx catalyst, whereby the quantity of the exhaust gas flowing through the NOx catalyst can be rendered approximate to zero more surely.

Herein, a period of time (which will hereinafter be termed [cutoff delay time]) till the quantity of the exhaust gas flowing through upstream of the NOx catalyst is minimized by the upstream-side exhaust quantity adjusting means since the downstream-side exhaust quantity adjusting means substantially minimizes the quantity of the exhaust gas flowing through downstream of the NOx catalyst, is a value that is empirically obtained beforehand as a time difference enabling the dispersion of the reducing agent within the NOx catalyst to be uniformized at the highest efficiency, and may also be set to a fixed value.

Thus cutoff delay time is considered to change depending on an exhaust temperature, an intake air quantity and so on. To be specific, the reducing agent can be dispersed more efficiently within the NOx catalyst when the exhaust temperature of the exhaust gas flowing through the NOx catalyst is higher, so that the cutoff delay time gets shortened. Further, as the intake air quantity into the internal combustion engine becomes larger, the air flow occurred when the exhaust gas is blocked by the downstream-side exhaust quantity adjusting means gets stronger, and therefore the cutoff delay time becomes shortened. Accordingly, a relationship between the cutoff delay time, the exhaust temperature and the intake air quantity is previously mapped, whereby the cutoff delay time may be read from this map each time the NOx reduction treatment is executed.

Given next is an explanation of a case, wherein, as in the second example, at the start timing of the NOx reduction treatment, the quantity of the exhaust gas flowing through the NOx catalyst is decreased by simultaneously operating the upstream-side exhaust quantity adjusting means and the downstream-side exhaust quantity adjusting means, and the reducing agent is added into the exhaust gas by the reducing agent adding means, and, in the course of the NOx reduction treatment, the reducing agent is dispersed into the NOx catalyst, in which state the upstream-side exhaust quantity adjusting means increases the quantity of the exhaust gas flowing through upstream of the NOx catalyst.

Thus, at the start timing of the NOx reduction treatment, the quantity of the exhaust gas flowing through the NOx catalyst is decreased by simultaneously operating the upstream-side exhaust quantity adjusting means and the downstream-side exhaust quantity adjusting means, and the reducing agent is added into the exhaust gas by the reducing agent adding means, in which case it follows that the NOx reducing reaction progresses only in a portion where the reducing agent disperses in the NOx catalyst.

Then, when approaching the termination of the NOx reducing reaction, the quantity of the exhaust gas flowing through upstream of the NOx catalyst is increased by the upstream-side exhaust quantity adjusting means. Thereupon, a new flow of the exhaust gas flowing through the NOx catalyst occurs (a flow state of the exhaust gas in the NOx catalyst changes), and the reducing agent in the NOx catalyst further disperses and comes to disperse more uniformly within the NOx catalyst.

As described above, after the upstream-side exhaust quantity adjusting means has increased the quantity of the exhaust gas flowing through upstream of the NOx catalyst, on the occasion of the termination of the NOx reducing reaction in the whole of the NOx catalyst, the downstream-side exhaust quantity adjusting means increases the quantity of the exhaust gas flowing through downstream of the NOx catalyst, thereby enabling the end of the NOx reduction treatment.

Hereat, a period of time (which will hereinafter be referred to as [open delay time]) till the downstream-side exhaust quantity adjusting means increases the quantity of the exhaust gas flowing through downstream of the NOx catalyst since the upstream-side exhaust quantity adjusting means has increased the quantity of the exhaust gas flowing through upstream of the NOx catalyst, is a period of time that is empirically obtained beforehand as the time sufficient for getting the reducing agent dispersed uniformly within the NOx catalyst and further for getting the NOx reduced throughout the whole of the NOx catalyst.

Then, this open delay time is, as in the case of the cutoff delay time, affected by the exhaust temperature of the exhaust gas flowing through the NOx catalyst and by the intake air quantity into the internal combustion engine. Moreover, the open delay time is affected by changes in the operation state of the internal combustion engine. Namely, as the change of the operation state of the internal combustion engine, which is taken by comparing the operation state at a point of time when the quantity of the exhaust gas flowing through the NOx catalyst is substantially minimized by operating the upstream-side exhaust quantity adjusting means and the downstream-side exhaust quantity adjusting means and the operation state at a point of time when the upstream-side exhaust quantity adjusting means increases the quantity of the exhaust gas flowing through upstream of the NOx catalyst, gets larger, there becomes stronger the new exhaust gas flow occurred when the upstream-side exhaust quantity adjusting means increases the quantity of the exhaust gas flowing through upstream of the NOx catalyst.

Hence, the open delay time may be set to a fixed value that is empirically obtained previously, and may also be derived in a way that previously maps a relationship between the exhaust temperature, the intake air quantity and the change of the operation state of the internal combustion engine, and reads the open delay time associated with each parameter value from the map.

With this contrivance, in the NOx reduction treatment, the reducing agent can be dispersed more uniformly in the NOx catalyst, and, more surely, the NOx reduction treatment can be completed over the whole of the NOx catalyst.

In addition, in the case of decreasing the quantity of the exhaust gas flowing through upstream or downstream of the NOx catalyst, the quantity of the exhaust gas flowing through upstream or downstream of the NOx catalyst does not always have to be substantially minimized. If the quantity of the exhaust gas flowing through upstream or downstream of the NOx catalyst is decreased sufficiently, the identical effect can be produced as the case that the quantity of the exhaust gas flowing through upstream or downstream of the NOx catalyst is substantially minimized.

Further, according to the present invention, in a state where the quantity of the exhaust gas flowing through downstream of the NOx catalyst is decreased and the reducing agent.added from the reducing agent adding means exists within the NOx catalyst, the upstream-side exhaust quantity adjusting means may perform an increasing/decreasing operation, once or more, of temporarily increasing and then decreasing the quantity of the exhaust gas flowing through upstream of the NOx catalyst.

Specifically, at the start of the NOx reduction treatment, the upstream-side exhaust quantity adjusting means substantially minimizes the quantity of the exhaust gas flowing through upstream of the NOx catalyst, and, at the same time, the downstream-side exhaust quantity adjusting means substantially minimizes the quantity of the exhaust gas flowing through downstream of the NOx catalyst. Then, along with this operation, the reducing agent is added from the reducing agent adding means and is dispersed in part of the NOx catalyst, thereby getting the NOx reduction treatment progressed. Thereafter, the upstream-side exhaust quantity adjusting means performs the increasing/decreasing operation, once or more, of temporarily increasing and then decreasing the quantity of the exhaust gas flowing through upstream of the NOx catalyst.

If done so, the new exhaust gas flow through the NOx catalyst can be occurred once or more in the course of the progress of the NOx reducing reaction in part of the NOx catalyst (the exhaust gas flow state can be changed once or more). With this operation thus done, the reducing agent dispersing in part of the NOx catalyst can be further dispersed, whereby the reducing agent can be dispersed more surely and more uniformly throughout the whole of the NOx catalyst. As a result, the NOx reduction treatment can be completed more surely over the whole of the NOx catalyst.

Hereat, the increasing/decreasing operation of the quantity of the exhaust gas flowing through upstream of the NOx catalyst may also be performed a plural number of times. Through these plural operations, the new exhaust gas flow through the NOx catalyst can be occurred a plural number of times (the exhaust gas flow state can be changed a plural number of times), and, more surely, the reducing agent can be uniformly dispersed throughout the whole of the NOx catalyst. As a result, the NOx reduction treatment can be completed more surely over the whole of the NOx catalyst

Herein, in the increasing/decreasing operation of the quantity of the exhaust gas, a length of the period for which to increase the quantity of the exhaust gas flowing through upstream of the NOx catalyst may be shorter as the exhaust temperature of the exhaust gas flowing through the NOx catalyst is higher and may also be shorter as the intake air quantity into the internal combustion engine is larger. Further, in the increasing/decreasing operation of the quantity of the exhaust gas, a length of the period for which to decrease the quantity of the exhaust gas flowing through upstream of the NOx catalyst may be shorter as the reduction quantity requested of the NOx catalyst is smaller and may also be shorter as the bed temperature of the NOx catalyst is higher. Moreover, the number of the increasing/decreasing operations of the quantity of the exhaust gas may be smaller as the intake air quantity into the internal combustion engine is larger and may also be smaller as the bed temperature of the NOx catalyst or the exhaust temperature of the exhaust gas flowing through the NOx catalyst is higher.

Accordingly, in the increasing/decreasing operation of the quantity of the exhaust gas, the length of the period for which to increase the quantity of the exhaust gas flowing through upstream of the NOx catalyst, an interval of the increasing/decreasing operations of the quantity of the exhaust gas and the number of these increasing/decreasing operations, may be determined in a way that maps a relationship between these parameters and the intake air quantity into the internal combustion engine, the bed temperature of the NOx catalyst or the exhaust temperature of the exhaust gas flowing through the NOX catalyst and the reduction quantity requested of the NOx catalyst, and then reads those parameters from this map.

Further, according to the present invention, the exhaust gas purification system of the internal combustion engine may further comprise a bypath for bypassing the exhaust gas to the occlusion reduction type NOx catalyst, the upstream-side exhaust quantity adjusting means, and the downstream-side exhaust quantity adjusting means, wherein when the upstream-side exhaust quantity adjusting means decreases the quantity of the exhaust gas flowing through upstream of the occlusion reduction type NOx catalyst and when the downstream-side exhaust quantity adjusting means decreases the quantity of the exhaust gas flowing through downstream of the occlusion reduction type NOx catalyst, at least part of the exhaust gas may flow through the bypath.

Namely, the present invention described above can be applied to an exhaust system in which an exhaust path of the internal combustion engine is provided with the bypath for bypassing the exhaust gas to the NOx catalyst, the upstream-side exhaust quantity adjusting means, and the downstream-side exhaust quantity adjusting means. Moreover, this bypath may be provided with a second NOx catalyst that is the same as the NOx catalyst given above. In this case, when executing the NOx reduction treatment of the NOx catalyst, the exhaust gas of the internal combustion engine is made to flow through the bypath, thereby enabling the execution of the NOx reduction treatment of the NOx catalyst without affecting the operation state of the internal combustion engine.

Similarly, in the case of executing the NOx reduction treatment of the second NOx catalyst, the quantity of the exhaust gas flowing through the NOx catalyst is increased by operating the upstream-side exhaust quantity adjusting means and/or the downstream-side exhaust quantity adjusting means, in other words, the quantity of the exhaust gas flowing through the bypath is decreased, and thereafter the NOx reduction treatment may be executed by supplying the reducing agent to the second NOx catalyst. In this case, the bypath may be, as in the case of the exhaust path, provided with the exhaust quantity adjusting means on the upstream side and/or the downstream side of the second NOx catalyst, and may also be provided with the reducing agent adding means.

Moreover, according to the present invention, the exhaust gas purification system of the internal combustion engine may further comprise pressure detecting means disposed downstream of the occlusion reduction type NOx catalyst and detecting a pressure, on the downstream side of the occlusion reduction type NOx catalyst, in the exhaust path, wherein in a state where the quantity of the exhaust gas flowing through downstream of the occlusion reduction type NOx catalyst is decreased and the reducing agent added from the reducing agent adding means exists within the occlusion reduction type NOx catalyst, if the pressure detected by the pressure detecting means is equal to or higher than a predetermined pressure, the upstream-side exhaust quantity adjusting means may decrease the quantity of the exhaust gas flowing through upstream of the occlusion reduction type NOx catalyst.

Namely, in the invention, the cutoff delay time is neither empirically obtained beforehand nor read from the map but may be determined based on an output signal of pressure detecting means disposed downstream of the NOx catalyst and detecting a pressure on the downstream side of the NOx catalyst.

Considered is, for example, a case of conducting such control that at the start of the NOx reduction treatment, the quantity of the exhaust gas flowing through downstream of the NOx catalyst is minimized only by the downstream-side exhaust quantity adjusting means, the reducing agent adding means adds the reducing agent into the exhaust gas, and, thereafter, the upstream-side exhaust quantity adjusting means minimizes the quantity of the exhaust gas flowing through upstream of the NOx catalyst. In this case, to begin with, the downstream-side exhaust quantity adjusting means minimizes the quantity of the exhaust gas flowing through downstream of the NOx catalyst. Thereupon, as described above, the exhaust gas flowing through downstream of the NOx catalyst is blocked by the downstream-side exhaust quantity adjusting means, whereby a flow state of the exhaust gas changes. On this occasion, a pressure on the upstream side of the downstream-side exhaust quantity adjusting means rises.

Then, at a point of time when the exhaust pressure detected by the pressure detecting means becomes equal to or higher than a predetermined pressure due to the rise of the pressure, it is judged that the dispersion of the reducing agent is sufficiently conducted owing to the change of the flow of the exhaust gas, then the quantity of the exhaust gas flowing through upstream of the NOx catalyst is substantially minimized by operating the upstream-side exhaust quantity adjusting means, and the change of the flow of the exhaust gas may thus be restrained.

Herein, the predetermined pressure is a value of the pressure from which it can be judged, if the pressure on the downstream side of the NOx catalyst reaches this value by the downstream-side exhaust quantity adjusting means substantially minimizing the quantity of the exhaust gas flowing through downstream of the NOx catalyst, that the reducing agent in the NOx catalyst is sufficiently dispersed due to the change of the flow of the exhaust gas. This value may be empirically obtained previously.

With this operation done so, it can be judged, based on the actual fluctuation in the pressure on the downstream side of the NOx catalyst, that the reducing agent is sufficiently dispersed in the NOx catalyst. Hence, the cutoff delay time can be determined more surely. As a result, the NOx reduction treatment can be completed over the whole of the NOx catalyst with more of the certainty.

Considered next is another case where, at the start of the NOx reduction treatment, the quantity of the exhaust gas flowing through the NOx catalyst is substantially minimized by operating the upstream-side exhaust quantity adjusting means and the downstream-side exhaust quantity adjusting means almost simultaneously, and, at such a stage that the NOx reducing reaction progresses, the upstream-side exhaust quantity adjusting means increases the quantity of the exhaust gas flowing through upstream of the NOx catalyst, and, after an elapse of the open delay time, the downstream-side exhaust quantity adjusting means increases the quantity of the exhaust gas flowing through downstream of the NOx catalyst.

Namely, in the case, the open delay time is neither empirically obtained beforehand nor read from the map but may be determined based on an output signal of pressure detecting means disposed downstream of the NOx catalyst and detecting a pressure on the downstream side of the NOx catalyst.

In this case, after the upstream-side exhaust quantity adjusting means has increased the quantity of the exhaust gas flowing through upstream of the NOx catalyst, a pressure on the upstream side of the downstream-side exhaust quantity adjusting means rises. When the exhaust pressure detected by the pressure detecting means becomes equal to or higher than the predetermined pressure, the downstream-side exhaust quantity adjusting means increases the quantity of the exhaust gas flowing through downstream of the NOx catalyst, and the NOx reduction treatment may be thus finished.

Further in this case, after the upstream-side exhaust quantity adjusting means has increased the quantity of the exhaust gas flowing through upstream of the NOx catalyst, there may be waited for the NOx reducing reaction to further terminate throughout the whole of the NOx catalyst from a point of time when the exhaust pressure detected by the pressure detecting means becomes equal to or higher than the predetermined pressure.

If the operation is done in this way, based on the actual change of the pressure on the downstream side of the NOx catalyst, the upstream-side exhaust quantity adjusting means increases the quantity of the exhaust gas flowing through upstream of the NOx catalyst, thereby making it possible to detect more surely that the reducing agent dispersing in part of the NOx catalyst has dispersed throughout the whole of the NOx catalyst. Then, the NOx reduction treatment can be completed over the whole of the NOx catalyst with more of the certainty.

Considered next is a case, wherein in a state where the quantity of the exhaust gas flowing through downstream of the occlusion reduction type NOx catalyst is substantially minimized and the reducing agent added from the reducing agent adding means exists within the NOx catalyst, the upstream-side exhaust quantity adjusting means performs the increasing/decreasing operation of the exhaust gas flowing through upstream of the NOx catalyst. In this case also, the pressure on the downstream side of the NOx catalyst is detected by the pressure detecting means and becomes equal to or higher than the predetermined pressure, whereby in the increasing/decreasing operation, there may be finished the state of increasing the quantity of the exhaust gas flowing through upstream of the NOx catalyst.

Further, according to the present invention, the exhaust gas purification system of the internal combustion engine may further comprise concentration detecting means disposed downstream of the occlusion reduction type NOx catalyst and detecting a concentration of a specified component in the exhaust gas flowing through downstream of the occlusion reduction type NOx catalyst,
wherein in a state where the quantity of the exhaust gas flowing through downstream of the occlusion reduction type NOx catalyst is decreased and the reducing agent added from the reducing agent adding means exists within the occlusion reduction type NOx catalyst, if the concentration of the specified component in the exhaust gas that is detected by the concentration detecting means reaches a predetermined concentration, the upstream-side exhaust quantity adjusting means may decrease the quantity of the exhaust gas flowing through upstream of the occlusion reduction type NOx catalyst.

Herein, in place of the pressure detecting means described above, the concentration detecting means detecting the concentration of the specified component on the downstream of the NOx catalyst is provided. Then, the cutoff delay time is determined based on the concentration of the specified component in the exhaust gas that is detected by the concentration detecting means. Herein, the concentration of the specified component may be set as a fuel concentration in the exhaust gas, i.e., an air-fuel ratio. In this case, the concentration detecting means may be constructed of an air-fuel ratio sensor.

Considered is, for instance, a case of performing such control that, at the start of the NOx reduction treatment, the quantity of the exhaust gas flowing through downstream of the NOx catalyst is substantially minimized only by the downstream-side exhaust quantity adjusting means, the reducing agent adding means adds the reducing agent into the exhaust gas, and, thereafter, the upstream-side exhaust quantity adjusting means substantially minimizes the quantity of the exhaust gas flowing through upstream of the NOx catalyst. In this case, after the point of time when the downstream-side exhaust quantity adjusting means substantially minimizes the quantity of the exhaust gas flowing through downstream of the NOx catalyst, the reducing agent disperses down to the downstream-side portion of the NOx catalyst, and therefore a detection signal by the air-fuel ratio sensor decreases.

Then, just when the air-fuel ratio detected by the air-fuel ratio sensor becomes equal to or smaller than a predetermined air-fuel ratio, it is judged that the reducing agent sufficiently disperses throughout the whole of the NOx catalyst, and the upstream-side exhaust quantity adjusting means minimizes the quantity of the exhaust gas flowing through upstream of the NOx catalyst.

Herein, the predetermined concentration is a value of the air-fuel ratio from which it can be, when a value of the air-fuel ratio on the downstream side of the NOx catalyst reaches this value, judged that the reducing agent sufficiently disperses throughout the whole of the NOx catalyst, and may be empirically obtained beforehand. If done in this way, it can be judged, based on the actual air-fuel ratio on the downstream side of the NOx catalyst, that the reducing agent sufficiently disperses throughout the whole of the NOx catalyst, and hence the cutoff delay time or the open delay time can be determined more precisely. As a result, the NOx reduction treatment can be completed over the whole of the NOx catalyst with more of the certainty.

Considered next is another case where, at the start of the NOx reduction treatment, the quantity of the exhaust gas flowing through the NOx catalyst is substantially minimized by operating the upstream-side exhaust quantity adjusting means and the downstream-side exhaust quantity adjusting means almost simultaneously, at such a stage that the NOx reducing reaction progresses, to begin with, the upstream-side exhaust quantity adjusting means increases the quantity of the exhaust gas flowing through upstream of the NOx catalyst, and, after an elapse of the open delay time, the downstream-side exhaust quantity adjusting means increases the quantity of the exhaust gas flowing through downstream of the NOx catalyst.

In this case, the open delay time is determined based on the concentration of the specified component in the exhaust gas that is detected by the concentration detecting means. Herein, the concentration of the specified component may be set as a fuel concentration in the exhaust gas, i.e., an air-fuel ratio. In this case, the concentration detecting means may be constructed of an air-fuel ratio sensor.

In this case, after the upstream-side exhaust quantity adjusting means has increased the quantity of the exhaust gas flowing through upstream of the NOx catalyst, the reducing agent disperses down to the downstream-side portion of the NOx catalyst, and therefore a detection signal by the air-fuel ratio sensor decreases. when the air-fuel ratio detected by the air-fuel ratio sensor becomes equal to or smaller than the predetermined air-fuel ratio, the downstream-side exhaust quantity adjusting means increases the quantity of the exhaust gas flowing through downstream of the NOx catalyst, and the NOx reduction treatment may be thus finished.

Further in this case, after the upstream-side exhaust quantity adjusting means has increased the quantity of the exhaust gas flowing through upstream of the NOx catalyst, there may be waited for the NOx reducing reaction to further terminate throughout the whole of the NOx catalyst from a point of time when the air-fuel ratio detected by the air-fuel ratio sensor becomes equal to or smaller than the predetermined air-fuel ratio.

With this operation done in this way, it can be judged more precisely that the upstream-side exhaust quantity adjusting means increases the quantity of the exhaust gas flowing through upstream of the NOx catalyst, whereby the.reducing agent dispersing in part of the NOx catalyst has sufficiently dispersed throughout the whole of the NOx catalyst. As a result, the NOx reduction treatment can be completed over the whole of the NOx catalyst more surely

Considered next is a case, wherein in a state where the quantity of the exhaust gas flowing through downstream of the occlusion reduction type NOx catalyst is substantially minimized and the reducing agent added from the reducing agent adding means exists within the NOx catalyst, the upstream-side exhaust quantity adjusting means performs the increasing/decreasing operation of the exhaust gas flowing through upstream of the NOx catalyst. In this case also, the air-fuel ratio on the downstream side of the NOx catalyst is detected by the air-fuel ratio sensor and becomes equal to or smaller than the predetermined air-fuel ratio, whereby in the increasing/decreasing operation, there may be finished the state of increasing the quantity of the exhaust gas flowing through upstream of the NOx catalyst.

Herein, the concentration of the specified component in the exhaust gas flowing through downstream of the occlusion reduction type NOx catalyst is not limited to the air-fuel ratio. It may be judged, by detecting an oxygen concentration and an HC concentration in the exhaust gas, that the reducing agent has dispersed throughout the whole of the NOx catalyst, and it may be detected, by detecting a NOx concentration in the exhaust gas, that the NOx reduction treatment has been completed.

Furthermore, according to the present invention, the exhaust gas purification system of the internal combustion engine may further comprise bypath exhaust quantity adjusting means provided in the bypath and adjusting a quantity of the exhaust gas flowing though the bypath,
wherein in a state where the quantity of the exhaust gas flowing through downstream of the occlusion reduction type NOx catalyst is decreased and the reducing agent added from the reducing agent adding means exists within the occlusion reduction type NOx catalyst, the upstream-side exhaust quantity adjusting means may change the quantity of the exhaust gas flowing through upstream of the occlusion reduction type NOx catalyst, and the bypath exhaust quantity adjusting means may change the quantity of the exhaust gas flowing through the bypath.

Herein, in the present invention discussed above, in the state where the quantity of the exhaust gas flowing through downstream of the NOx catalyst is substantially minimized and the reducing agent added from the reducing agent adding means exists within the occlusion reduction type NOx catalyst, the upstream-side exhaust quantity adjusting means changes the quantity of the exhaust gas flowing through upstream of the NOx catalyst. With this operation, the flow state of the exhaust gas is changed, and the reducing agent dispersing in part of the NOx catalyst is made to disperse more uniformly throughout the whole of the NOx catalyst.

Considered especially is a case in which at the start of the NOx reduction treatment, the quantity of the exhaust gas flowing through the NOx catalyst is substantially minimized by operating the upstream-side exhaust quantity adjusting means and the downstream-side exhaust quantity adjusting means almost simultaneously, and, at such a stage that the NOx reducing reaction progresses, the upstream-side exhaust quantity adjusting means increases the quantity of the exhaust gas flowing through upstream of the NOx catalyst, and, after an elapse of the open delay time, the downstream-side exhaust quantity adjusting means increases the quantity of the exhaust gas flowing through downstream of the NOx catalyst.

In this case, depending on a condition of the change of the operation state of the internal combustion engine, even when the upstream-side exhaust quantity adjusting means increases the quantity of the exhaust gas flowing through upstream of the NOx catalyst, it might happen that the flow state of the exhaust gas can not be sufficiently changed. This is a case such as showing almost no change in the operation state of the internal combustion engine since the start of the NOx reduction treatment. Namely, in such a case, there is almost none of difference in pressure between the upstream side and the downstream side of the upstream-side exhaust quantity adjusting means, and hence, even when operating the upstream-side exhaust quantity adjusting means, the quantity of the exhaust gas flowing through upstream of the NOx catalyst does not nearly change.

In such a case, the bypath exhaust quantity adjusting means for adjusting the quantity of the exhaust gas flowing through the bypath is further provided, and the quantity of the exhaust gas flowing through the bypath is changed by this bypath exhaust quantity adjusting means. Namely, the bypath exhaust quantity adjusting means changes the quantity of the exhaust gas flowing through the bypath, whereby the quantity of the exhaust gas flowing into the NOx catalyst also changes. Accordingly, the flow state of the exhaust gas flowing through the NOx catalyst can be changed by operating the bypath exhaust quantity adjusting means, and the reducing agent dispersing in part of the NOx catalyst can be made to disperse more uniformly throughout the whole of the NOx catalyst.

With the operation done in this way, even in such a case that the flow state of the exhaust gas in the NOx catalyst can not be changed by operating the upstream-side exhaust quantity adjusting means, the quantity of the exhaust gas flowing through the occlusion reduction type NOx catalyst can be changed by operating the bypath exhaust quantity adjusting means. As a result, the flow of the exhaust gas in the NOx catalyst can be changed.

It should be noted that the means for solving the problems according to the present invention can be employed by combining these means to the greatest possible degree.

According to the present invention, in the exhaust gas purification system of the internal combustion engine that reduces NOx occluded in the NOx catalyst by decreasing the quantity of the exhaust gas flowing through the occlusion reduction type NOx catalyst and supplying the reducing agent to the NOx catalyst, the dispersibility of the reducing agent into the NOx catalyst can be improved.

### BRIEF DESCRIPTION OF THE DRAWINGS

FIG. 1 is a schematic view showing a construction of an internal combustion engine and configurations of an exhaust system and of a control system thereof
FIG. 2 is a time chart that shows opening/closing of a first upstream-side valve , opening/closing of a first downstream-side valve, ON-OFF of a first reducing agent adding valve and a quantity of the exhaust gas flowing through a first NOx catalyst under conventional control;
FIG. 3 is a time chart that shows opening/closing of a first upstream-side valve, opening/closing of a first downstream-side valve, ON-OFF of a first reducing agent adding valve and a quantity of the exhaust gas flowing through a first NOx catalyst in a first embodiment of the present invention;
FIG. 4 is a flowchart showing a NOx reduction treatment routine in the first embodiment of the present invention;
FIG. 5 is a time chart that shows the opening/closing of the first upstream-side valve, the opening/closing of the first downstream-side valve, the ON-OFF of the first reducing agent adding valve, the quantity of the exhaust gas flowing through the first NOx catalyst and a change of pressure on a downstream side of the first NOx catalyst in a second mode according to the first embodiment of the present invention;
FIG. 6 is a flowchart showing the NOx reduction treatment routine in the second mode according to the first embodiment of the present invention;
FIG. 7 is a time chart that shows the opening/closing of the first upstream-side valve, the opening/closing of the first downstream-side valve, the ON-OFF of the first reducing agent adding valve, the quantity of the exhaust gas flowing through the first NOx catalyst and a change of air-fuel ratio on the downstream side of the NOx catalyst in a third mode according to the first embodiment of the present invention;
FIG. 8 is a flowchart showing the NOx reduction treatment routine in the third mode according to the first embodiment of the present invention;
FIG. 9 is a time chart that shows the opening/closing of the first upstream-side valve, the opening/closing of the first downstream-side valve, the ON-OFF of the first reducing agent adding valve and the quantity of the exhaust gas flowing through the first NOx catalyst in a second embodiment of the present invention;
FIG. 10 is a flowchart showing the NOx reduction treatment routine in the second embodiment of the present invention;
FIG. 11 is a time chart that shows the opening/closing of the first upstream-side valve, the opening/closing of the first downstream-side valve, the ON-OFF of the first reducing agent adding valve and the quantity of the exhaust gas flowing through the first NOx catalyst in a third embodiment of the present invention; and
FIG. 12 is a flowchart showing the NOx reduction treatment routine in the third embodiment of the present invention.

### DESCRIPTION OF THE EMBODIMENTS

A best node for carrying out the present invention will hereinafter be described in full-depth by way of an exemplification with reference to the drawings.

### <FIRST EMBODIMENT>

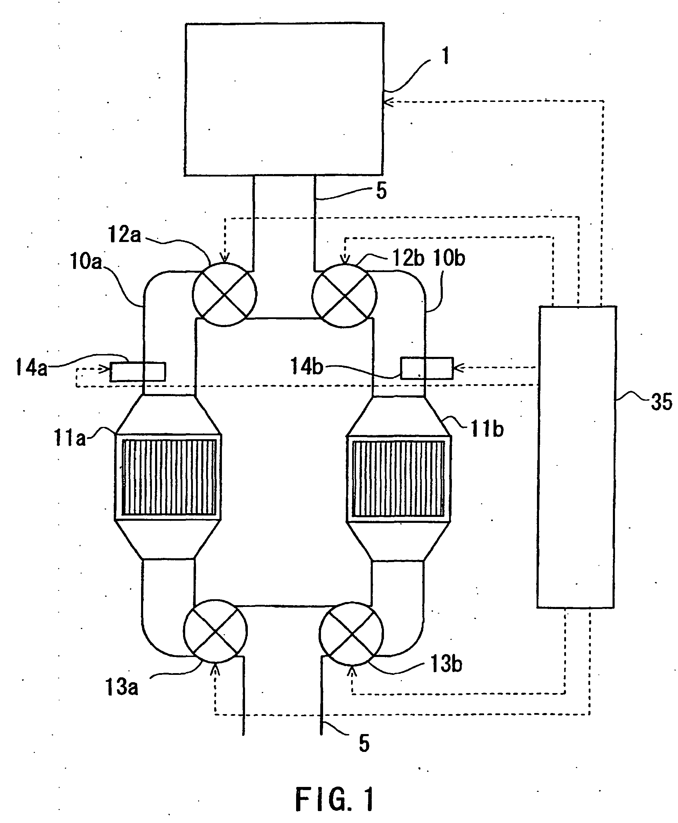

FIG. 1 is a schematic view showing a construction of an internal combustion engine and configurations of an exhaust system and of a control system thereof. Note that in FIG. 1, an interior of an internal combustion engine 1 and an intake system thereof are omitted.

In FIG. 1, an exhaust pipe 5 via which an exhaust gas from the internal combustion engine 1 flows, is connected to the internal combustion engine 1, and this exhaust pipe 5 is connected downstream to an unillustrated a muffler. Further, the exhaust pipe 5 branches off midways into a first branch path 10a and a second branch path 10b, wherein the first branch path 10a and the second branch path 10b converge downstream. Then, the first branch path 10a is provided with a first NOx catalyst 11a for occlusion-reducing NOx contained in the exhaust gas, and the second branch path 10b is similarly provided with a second NOx catalyst 11b.

Further, a first upstream-side valve 12a for controlling a quantity of the exhaust gas passing upstream of the first NOx catalyst 11a in the first branch path 10a, is provided upstream of the first NOx catalyst 11a in the first branch path 10a. Similarly, a second upstream-side valve 12b is provided upstream of the second NOx catalyst 11b in the second branch path 10b. It should be noted that the first upstream-side valve 12a and the second upstream-side valve 12b correspond to upstream-side exhaust gas quantity adjusting means in the present embodiment.

Further, in FIG. 1, a first reducing agent adding valve 14a for adding a fuel as a reducing agent to the exhaust gas on the occasion of an NOx reduction treatment of the first NOx catalyst 11a, is provided between the first upstream-side valve 12a and the first NOx catalyst 11a in the first branch path 10a. Similarly, a second reducing agent adding valve 14b is provided between the second upstream-side valve 12b and the second NOx catalyst 11b in the second branch path 10b. Herein, the first reducing agent adding valve 14a ad the second reducing agent adding valve 14b configure reducing agent adding means in the present embodiment.

Moreover, a first downstream-side valve 13a for controlling a quantity of the exhaust gas passing downstream of the first NOx catalyst 11a in the first branch path 10a, is provided downstream of the first NOx catalyst 11a in the first branch path 10a. Similarly, a second downstream-side valve 13b is provided downstream of the second NOx catalyst 11b in the second branch path 10b. It should be noted that the first downstream-side valve 13a and the second downstream-side valve 13b correspond to downstream-side exhaust gas quantity adjusting means in the present embodiment.

An electronic control unit (ECU) 35 for controlling the internal combustion engine 1 and the exhaust system is provided in a side-by-side relationship with the internal combustion engine 1 constructed as described above and the exhaust system thereof. This ECU 35 is a unit for controlling an operation state etc. of the internal combustion engine 1 according to a operating condition of the internal combustion engine 1 and in response to a request of a driver, and, besides, performing control related to the NOx reduction treatment of the first NOx catalyst 11a and the second NOx catalyst 11b of the internal combustion engine 1.

Connected via electric wiring to the ECU 35 are sensors related to the control of the operating state of the internal combustion engine 1, such as an unillustrated crank position sensor and an accelerator position sensor, whereby output signals thereof are inputted to the ECU 35. On the other hand, an unillustrated fuel injection valve etc. within the internal combustion engine 1 is connected via the electric wiring to the ECU 35, and, in addition, the first upstream-side valve 12a, the first downstream-side valve 13a, the second upstream-side valve 12b, the second downstream-side valve 13b, the first reducing agent adding valve 14a and the second reducing agent adding valve 14b in the present embodiment, are connected to the ECU 35, whereby these components are controlled by the ECU 35.

Further, the ECU 35 is mounted with a CPU, a ROM, a RAM, etc. and is stored with programs and maps containing data for conducting variety of control operations of the internal combustion engine 1. A SOx poisoning recovery treatment routine (its explanation is omitted) in addition to a NOx reduction treatment routine for occlusion-releasing NOx occluded in the first NOx catalyst 11a and the second NOx catalyst 11b, is one of the programs stored on the ROM of the ECU 35.

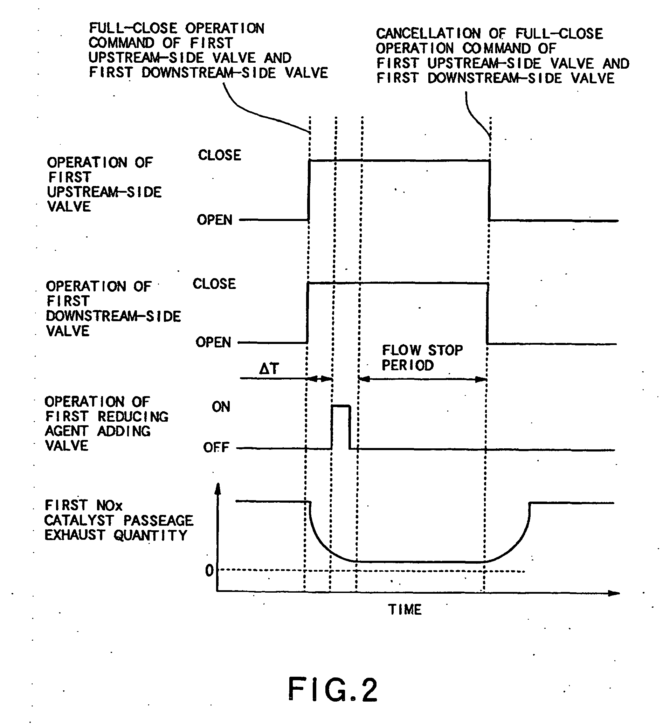

Next, in the exhaust system of this type of internal combustion engine 1, operations of the first upstream-side valve 12a, the first downstream-side valve 13a and the first reducing agent adding valve 14a and a change in quantity of the exhaust gas flowing via the first NOx catalyst 11a especially on the occasion of the NOx reduction treatment of the first NOx catalyst 11a, will be explained with reference to FIG. 2 by way of a case of conducting the conventional NOx reduction treatment. FIG. 2 is a time chart that shows opening/closing of the first upstream-side valve 12a, opening/closing of the first downstream-side valve 13a, ON-OFF of the first reducing agent adding valve 14a and a quantity of the exhaust gas flowing via the first NOx catalyst 11a, wherein the axis of abscissa represents time.

When the NOx reduction treatment of the first NOx catalyst 11a is executed, to start with, the ECU 35 issues a full-close operation command to the first upstream-side valve 12a and the first downstream-side valve 13a, and issues a full-open operation command to the second upstream-side valve 12b and the second downstream-side valve 13b Thereupon, it follows that approximately a whole quantity of exhaust gas that is flowing through the exhaust pipe 5 passes through the second branch path 10b. Accordingly, as shown in FIG. 2, after the first upstream-side valve 12a and the first downstream-side valve 13a have been fully closed, the quantity of the exhaust gas flowing via the first NOx catalyst 11a decreases and comes to approximately zero except leakages from the first upstream-side valve 12a and the first downstream-side valve 13a.

On the other hand, at a point of time when predetermined delay time ΔT elapses since the full-close operation command was issued to the first upstream-side valve 12a and the first downstream-side valve 13a, a fuel as a reducing agent is added into the exhaust gas from the first reducing agent adding valve 14a. Herein, in such a process that the quantity of the exhaust gas flowing via the first NOx catalyst 11a decreases, the delay time ΔT is set so that the fuel added into the exhaust gas from the first reducing agent adding valve 14a moves together with the exhaust gas on the downstream side, and, at a point of time when reaching the first NOx catalyst 11a, the quantity of the exhaust gas comes to approximately zero, while the fuel as the reducing agent disperses into the first NOx catalyst 11a

Then, during a period when the reducing agent disperses into the first NOx catalyst 11a, the NOx contained in first NOx catalyst 11a is reduced. Further, after the predetermined time has elapsed, the ECU 35 cancels the full-close operation command issued to the first upstream-side valve 12a and the first downstream-side valve 13a, and also cancels the full-open operation command to the second upstream-side valve 12b and the second downstream-side valve 13b. Then, the quantity of the exhaust gas flowing via the.first NOx catalyst 11a begins to increase and comes to a value equivalent to a value before executing the NOx reduction treatment, thereby finishing the NOx reduction treatment.

Hereat, after the first upstream-side valve 12a and the first downstream-side valve 13a have got into the full-close state and after the quantity of the exhaust gas flowing into the first NOx catalyst 11a has become approximately zero, a period till the quantity of the exhaust gas flowing through the first NOx catalyst 11a begins to increase since the cancellation of the full-close operations of the first upstream-side valve 12a and the first downstream-side valve 13a, is called [a flow stop period].

During the above flow stop period, when the fuel added from the first reducing agent adding valve 14a uniformly disperses throughout the whole of the first NOx catalyst 11a, the NOx reduction can be preferably conducted over the whole of the first NOx catalyst 11a. If the fuel added from the first reducing agent adding valve 14a disperses one-sidedly in part of the first NOx catalyst 11a on the upstream side or the downstream side, however, the fuel as the reducing agent does not spread over the whole of the first NOx catalyst 11a, and there might be a case where the NOx reduction treatment can not be surely executed.

It is considered that a scatter in the dispersion of the fuel in the first NOx catalyst 11a during the flow stop period occurs due to a scatter in a flow rate of the exhaust gas depending on the operating state of the internal combustion engine 1, scatters in valve closing speeds of the first upstream-side valve 12a and of the first downstream-side valve 13a and a scatter in the delay time ΔT.

Such being the case, in the present embodiment, the fuel added from the first reducing agent adding valve 14a is flowed to and dispersed into the first NOx catalyst 11a by closing the first upstream-side valve 12a and the first downstream-side valve 13a, and further a time difference is given between the valve closing time of the first upstream-side valve 12a and the valve closing time of the first downstream-side valve 13a, whereby a state of the flow of the exhaust gas in the first NOx catalyst 11a is changed, and the fuel flowed to the first NOx catalyst 11a is so dispersed as to spread over the whole of the first NOx catalyst 11a. With this operation, the fuel serving as the reducing agent is, it is contrived, dispersed more uniformly throughout the whole of the first NOx catalyst 11a.

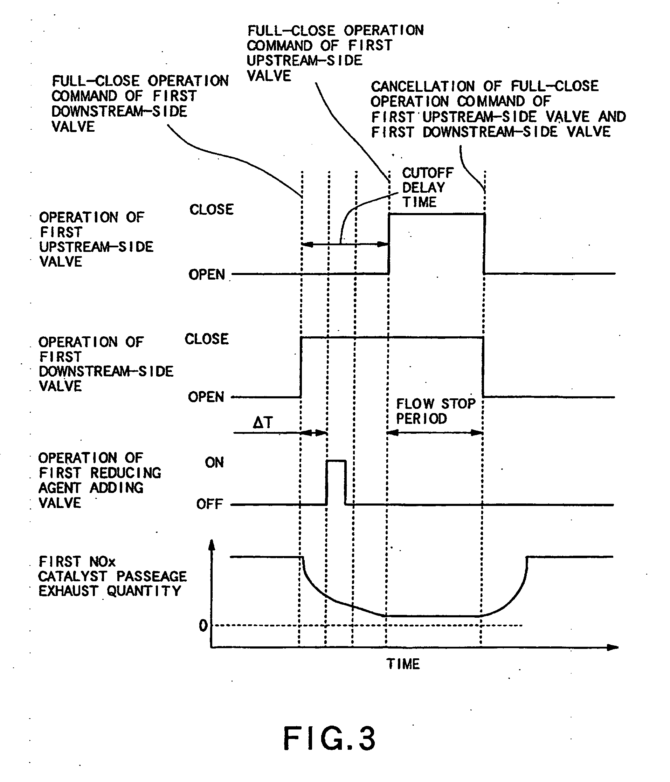

The operations of the first upstream-side valve 12a, the first downstream-side valve 13a and the first reducing agent adding valve 14a and the change in the quantity of the exhaust gas flowing via the first NOx catalyst 11a in this case, will be explained with reference to FIG. 3. FIG. 3 is a time chart that shows the opening/closing of the first upstream-side valve 12a, the opening/closing of the first downstream-side valve 13a, the ON-OFF of the first reducing agent adding valve 14a and the quantity of the exhaust gas flowing via the first NOx catalyst 11a in the present embodiment, wherein the axis of abscissa represents the time.

In the present embodiment, when the NOx reduction treatment of the first NOx catalyst 11a is executed, to start with, the ECU 35 issues the full-close operation command to the first downstream-side valve 13a, and issues the full-open operation command to the second upstream-side valve 12b and the second downstream-side valve 13b. On this occasion, none of the full-close operation command is issued to the first upstream-side valve 12a. Thereupon, along with the full-close operation of the first downstream-side valve 13b, there decreases the quantity of the exhaust gas flowing through downstream of the first NOx catalyst 11a. As a concomitant of this decrease, the quantity of the exhaust gas flowing through the first NOx catalyst 11a also decreases. Then, after the full-close operation command has been issued to the first downstream-side valve 13a and after an elapse of the delay time ΔT, the fuel is added into the exhaust gas from the first reducing agent adding valve 14a.

In this case, however, unlike the case where the quantity of the exhaust gas flowing through the first NOx catalyst 11a is set to approximately zero by both of the first upstream-side valve 12a and the first downstream-side valve 13a, when only the quantity of the exhaust gas flowing through downstream of the first NOx catalyst 11a via the first downstream-side valve 13a is approximately minimized, the quantity of the exhaust gas flowing through the first NOx catalyst 11a gradually decreases, and, besides, the state of the flow of the exhaust gas in the first NOx catalyst 11a changes due to blockage of the exhaust gas flowing through downstream of the first NOx catalyst 11a by the first downstream-side valve 13a.. To be specific, a backflow of the exhaust gas blocked downstream of the first NOx catalyst 11a and the flow of the exhaust gas flowing in upstream of first NOx catalyst 11a, cause turbulence of the flow of the exhaust gas in the first NOx catalyst 11a.

With this operation, the reducing agent added into the exhaust gas by the first reducing agent adding valve 14a, as the quantity of the exhaust gas flowing through the first NOx catalyst 11a decreases, decelerates its migration speed and substantially stops within the first NOx catalyst 11a, and besides, this reducing agent further disperses due to the change in the state of the air flow described above and spreads within the first NOx catalyst 11a, thereby dispersing more uniformly. In the present embodiment, it is known that the reducing agent added into the exhaust gas by the first reducing agent adding valve 14a, when substantially stopping within the first NOx catalyst 11a, disperses so as to spread mainly from the upstream side toward the downstream side of the first NOx catalyst 11a, and its dispersion gets uniformized

Then, in this state, the full-close operation command is issued to the first upstream-side valve 12a, and the quantity of the exhaust gas flowing through upstream of the first NOx catalyst 11a is approximately minimized, thereby coming to the flow stop period. Then, during this flow stop period, the NOx reduction treatment is executed over the whole of the first NOx catalyst 11a. Moreover, at a point of time when NOx reducing reaction terminates, the full-close operation command to the first upstream-side valve 12a and the first downstream-side valve 13a is cancelled, and the full-open operation command to the second upstream-side valve 12b and the second downstream-side valve 13b is cancelled. Then, the quantity of the exhaust gas flowing via the first NOx catalyst 11a begins to increase and comes to a value equivalent to a value before executing the NOx reduction treatment.

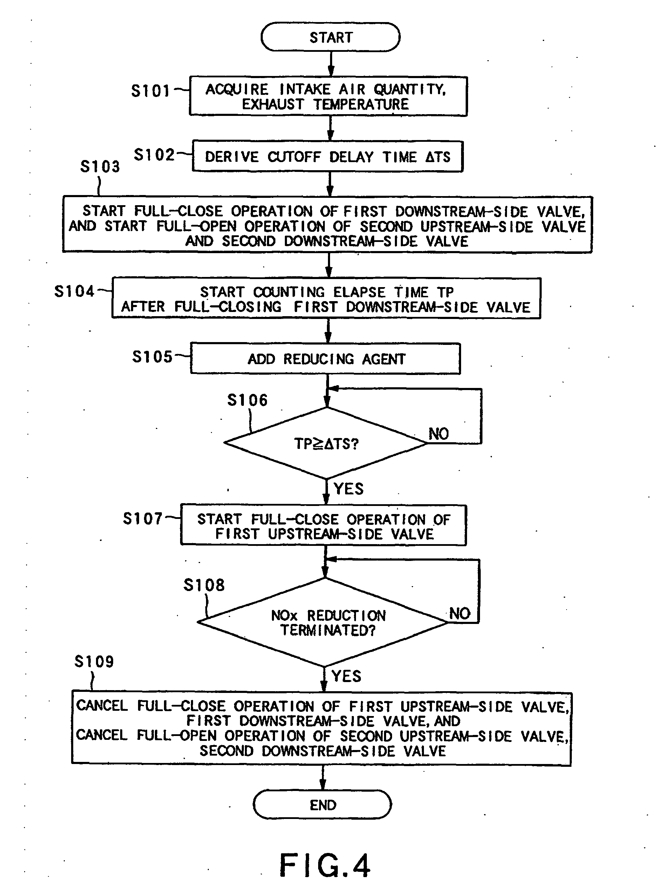

FIG. 4 shows a NOx reduction treatment routine according to the present embodiment. This routine is a program stored on the ROM of the ECU 35 and is executed by ECU 35 when a NOx reduction treatment start condition is satisfied. This NOx reduction treatment start condition may be specified so as to be met by an excess, over a threshold value, of operating time of the internal combustion engine 1 or a vehicle mileage (traveling distance), and may also be specified by an excess, over a threshold value, of a NOx concentration detected downstream of the first NOx catalyst 11a.

Upon execution of this routine, to begin with, in S101, an intake air quantity into the internal combustion engine 1 and an exhaust temperature of the exhaust gas flowing through the first NOx catalyst 11a, are acquired. The intake air quantity into the internal combustion engine 1 is acquired by such a process that an output of an unillustrated airflow meter is read by the ECU 35. The exhaust temperature of the exhaust gas flowing through the first NOx catalyst 11a is acquired by such a process that an output of an unillustrated exhaust temperature sensor provided at the exhaust pipe 5 is read by the ECU 35. When finishing the process in S101, the operation advances to a process in S102.

In S102, cutoff delay time ΔTS is derived. Herein, the cutoff delay time ΔTS is a period of time till, in this routine, the full-close operation command is issued to the first upstream-side valve 12a since the full-close operation command has been issued to the first downstream-side valve 13a. Namely, the cutoff delay time is a period of time required and sufficient for uniformly dispersing the fuel, which has been temporarily dispersed into the first NOx catalyst 11a, throughout the whole of the first NOx catalyst 11a by setting only the first downstream-side valve 13a in the full-close state.

Then, it is known, that this cutoff delay time ΔTS may be set shorter with a larger intake air quantity into the internal combustion engine 1 and may also be set shorter with a higher exhaust temperature of the exhaust gas flowing through the first NOx catalyst 11a. Hence, a relationship between the intake air quantity into the internal combustion engine 1, the exhaust temperature of the exhaust gas flowing through the first NOx catalyst 11a and the cutoff delay time ΔTS, is empirically obtained and mapped, whereby the cutoff delay time ΔTS is derived by reading a value of the cutoff delay time ΔTS, which is associated with the intake air quantity and the exhaust temperature obtained in S101. Upon an end of the process in S102, the operation advances to S103.

In S103, the full-close operation command is issued to the first downstream-side valve 13a, and the full-open operation command is issued to the second upstream-side valve 12b and the second downstream-side valve 13b. Thereupon, the first downstream-side valve 13a starts its full-close operation, and the second upstream-side valve 12b and the second downstream-side valve 13b start their full-open operations. On this occasion, the quantity of the exhaust gas flowing through a second NOx catalyst 11b increases, and while on the other hand the exhaust gas flowing through the first NOx catalyst 11a is blocked by the first downstream-side valve 13a disposed downstream and therefore decreases. Upon an end of the process in S103, the operation advances to S104.

In S104, for measuring the cutoff delay time ΔTS, counting of elapse time TP after the full-close operation of the first downstream-side valve 13a is started. When finishing the process in S104, the operation advances to S105.

Then, in S105, the fuel as the reducing agent is added from the first reducing agent adding valve 14a into the exhaust gas flowing through the first branch path 10a. To be specific, at a point of time when the elapse time TP after the full-close of the first downstream-side valve 13a becomes the preset delay time ΔT, the fuel is added from the first reducing agent adding valve 14a. It should be noted that the delay time ΔT is a value that is empirically obtained beforehand so that just when the quantity of the exhaust gas flowing through the first NOx catalyst 11a goes decreasing and reaches approximately the minimum, the fuel added from the first reducing agent adding valve 14a is dispersed in an upstream-side portion of the first NOx catalyst 11a. Upon an end of the process in S105, the operation advances to S106.

In S106, it is judged whether or not the elapse time TP after the full-close of the first downstream-side valve 13a is equal to or longer than the cutoff delay time ΔTS. Herein, in the case of judging that the elapse time TP after the full-close of the first downstream-side valve 13a is shorter than the cutoff delay time ΔTS, the operation gets back to the process before this process, and again in this process it is judged whether or not the elapse time TP after the full-close of the first downstream-side valve 13a is equal to or longer than the cutoff delay time ΔTS. Then, in the present process, this process is repeated till the elapse time TP after the full-close of the first downstream-side valve 13a is judged to be equal to or longer than the cutoff delay time ΔTS. On the other hand, when judging that the elapse time TP after the full-close of the first downstream-side valve 13a is equal to or longer than the cutoff delay time ΔTS, the operation advances to S107. In other words, after waiting for the cutoff delay time ΔTS to elapse since the full-close operation command has been issued to the first downstream-side valve 13a, the operation goes forward to S107.

Herein, after issuing the full-close operation command to the first downstream-side valve 13a, the fuel added from the first reducing agent adding valve 14a, as the quantity of the exhaust gas flowing through the first NOx catalyst 11a decreases, disperses in the upstream-side portion of the first NOx catalyst 11a. Further, during the elapse of the cutoff delay time ΔTS due to the change in the exhaust gas that occurs because of the blockage of the exhaust gas flowing through downstream of the first NOx catalyst 11a by the first downstream-side valve 13a, the fuel dispersing partially in the first NOx catalyst 11a spreads downstream and uniformly disperses over the whole of the first NOx catalyst 11a. Namely, the cutoff delay time ΔTS is a period of time set as the time sufficient for the occurrence of such a phenomenon in the first NOx catalyst 11a.

Next, in S107, the full-close operation command is issued to the first upstream-side valve 12a. By this command, the quantity of the exhaust gas flowing through upstream of the first NOx catalyst 11a gets substantially minimized, and hence, in combination with the first downstream-side valve 13a being in the full-close state, the quantity of the exhaust gas flowing through the first NOx catalyst 11a can be rendered approximately zero. When finishing the process in S107, the operation advances to S108.

In S108, it is judged whether or not the NOx reducing reaction terminates in the first NOx catalyst 11a. As for this judgment, the NOx reducing reaction may be judged to terminate by knowing that empirically-acquired NOx reduction time elapses after the reducing agent has been added, and may also be judged based on an output signal of an unillustrated NOx sensor provided downstream of the first NOx catalyst 11a. If it is judged in S108 that the NOx reducing reaction does not yet terminate, the operation returns to the process before S108, and again in S108 it is judged whether the NOx reducing reaction terminates or not, wherein this process is repeated till the NOx reducing reaction is judged to terminate in S108. While on the other hand, in S108, when judging that the NOx reducing reaction terminates, the operation advances to a process in S109. Note that the termination of the NOx reducing reaction does not necessarily connote the end of the NOx reducing reaction, and the NOx reducing reaction may also be construed to terminate from the NOx reducing reaction getting advanced to a degree enabling such judgment that a NOx purifying capacity of the first NOx catalyst 11a has sufficiently been recovered.

In S109, the full-close state of each of the first upstream-side valve 12a and the first downstream-side valve 13a is cancelled, and the full-open state of each of the second upstream-side valve 12b and the second downstream-side valve 13b is cancelled, whereby the exhaust gas from the internal combustion engine 1 flows through both of the first NOx catalyst 11a and the second NOx catalyst 11b, and the NOx reduction treatment is ended. Upon finishing the process in S109, this routine is temporarily ended.

As discussed above, in the present embodiment, in the NOx reduction treatment, at first, the exhaust gas flowing through downstream of the first NOx catalyst 11a is blocked by causing the full-open operation of only the first downstream-side valve 13a. With this blockage, the fuel added from the first reducing agent adding valve 14a is dispersed in the upstream-side portion of the first NOx catalyst 11a, and the dispersed fuel is further dispersed to spread on the downstream side. With this contrivance, the fuel as the reducing agent can be dispersed more uniformly throughout the whole of the first NOx catalyst 11a, thereby enabling the NOx reduction treatment to be completed over the whole of the first NOx catalyst 11a more surely.

Next, another mode of the NOx reduction treatment in the present embodiment will be discussed. In this mode, the operation is not that after issuing the full-close operation command to the first downstream-side valve 13a and the full-open operation command to the second upstream-side valve 12a and the second downstream-side valve 13b, at a point of time when the cutoff delay time ΔTS derived from the map elapses, the full-close operation command is issued to the first upstream-side valve 12a. In this mode, but the operation is that a pressure of the exhaust gas flowing through downstream of the first NOx catalyst 11a is monitored, and the monitored exhaust pressure becomes equal to or higher than a predetermined pressure, whereby it is judged that the fuel serving as the reducing agent spreads out down to the downstream side of the first NOx catalyst 11a and the full-close operation command is issued to the first upstream-side valve 12a.

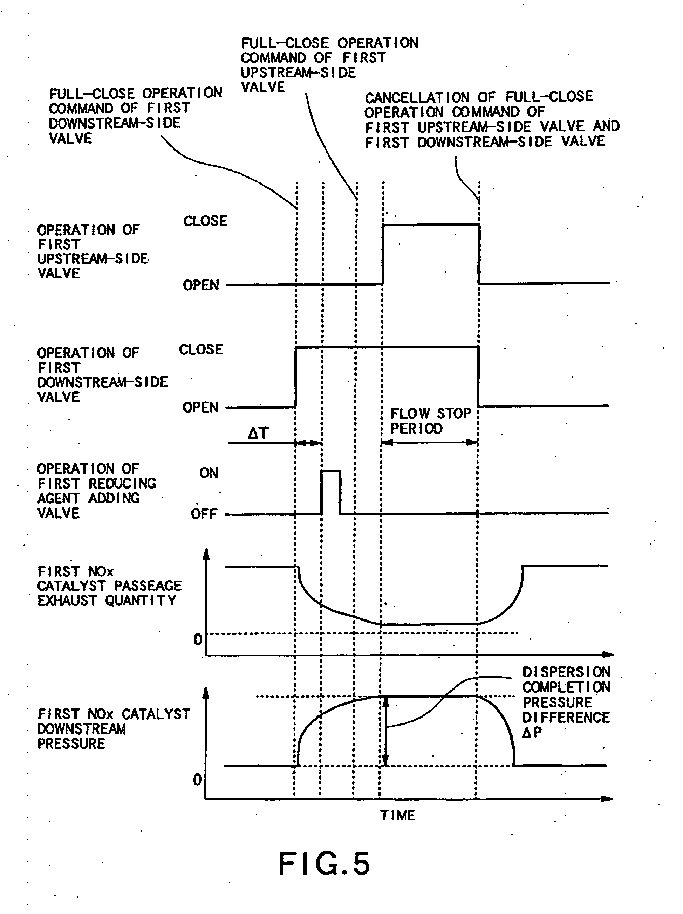

In this mode, as described above, on the first branch path 10a, an unillustrated pressure sensor shall be provided downstream of the first NOx catalyst 11a and also upstream of the first downstream-side valve 13a. In this case, in addition to the operations of the first upstream-side valve 12a, the first downstream-side valve 13a and the first reducing agent adding valve 14a and also the change in the quantity of the exhaust gas flowing through the first NOx catalyst 11a, a change in the pressure on the downstream side of the first NOx catalyst 11a and on the upstream side of the first downstream-side valve 13a, will be explained with reference to FIG. 5. FIG. 5 is a time chart that shows the opening/closing of the first upstream-side valve 12a, the opening/closing of the first downstream-side valve 13a, the ON-OFF of the first reducing agent adding valve 14a, the quantity of the exhaust gas flowing via the first NOx catalyst 11a and the change in the pressure on the downstream side of the first NOx catalyst 11a and on the upstream side of the first downstream-side valve 13a in the present embodiment, wherein the axis of abscissa represents the time.

The opening/closing of the first upstream-side valve 12a, the opening/closing of the first downstream-side valve 13a, the ON-OFF of the first reducing agent adding valve 14a and the quantity of the exhaust gas flowing via the first NOx catalyst 11a, are the same as those shown in FIG. 3, and hence their explanations are omitted. Herein, as discussed above, the exhaust gas flowing through downstream of the first NOx catalyst 11a is blocked by the valve full-open operation of the first downstream-side valve 13a, with the result that the flow state of the exhaust gas changes. Along with the change in the flow state of the exhaust gas, there rises the pressure of the exhaust gas on the downstream side of the first NOx catalyst 11a and on the upstream side of the first downstream-side valve 13a.

This rise in the pressure (pressure fluctuation) has a deep correlation with the occurrence to the new exhaust gas flow described above, and therefore it can be judged, from an excess of this pressure rise over a predetermined pressure, that the fuel dispersing in the upstream-side portion of the first NOx catalyst 11a has further dispersed to spread over the whole of the first NOx catalyst 11a. Moreover, in this case, if the predetermined pressure is set too high, oxygen excessively flows from the upstream side into the first NOx catalyst 11a, then the added fuel is easy to expend for consumption of the oxygen, and hence there might be a case where a NOx reduction efficiency declines. Accordingly, in the case of setting the predetermined pressure, it is preferable that a relationship between a fuel dispersion level in the first NOx catalyst 11a, an oxygen inflow quantity into the first NOx catalyst 11a and a pressure of the exhaust gas on the downstream side of the first NOx catalyst 11a and on the upstream side of the first downstream-side valve 13a, is empirically acquired beforehand, and this predetermined pressure is set to an optimum value.

In this mode, after the full-close operation of the first downstream-side valve 13a, the rise in the pressure of the exhaust gas on the downstream side of the first NOx catalyst 11a and on the upstream side of the first downstream-side valve 13a becomes equal to or higher than a dispersion completion pressure difference ΔP, whereby the added fuel is judged to disperse throughout the whole of the first NOx catalyst 11a. Then, the full-close operation command is issued to the first upstream-side valve 12a.

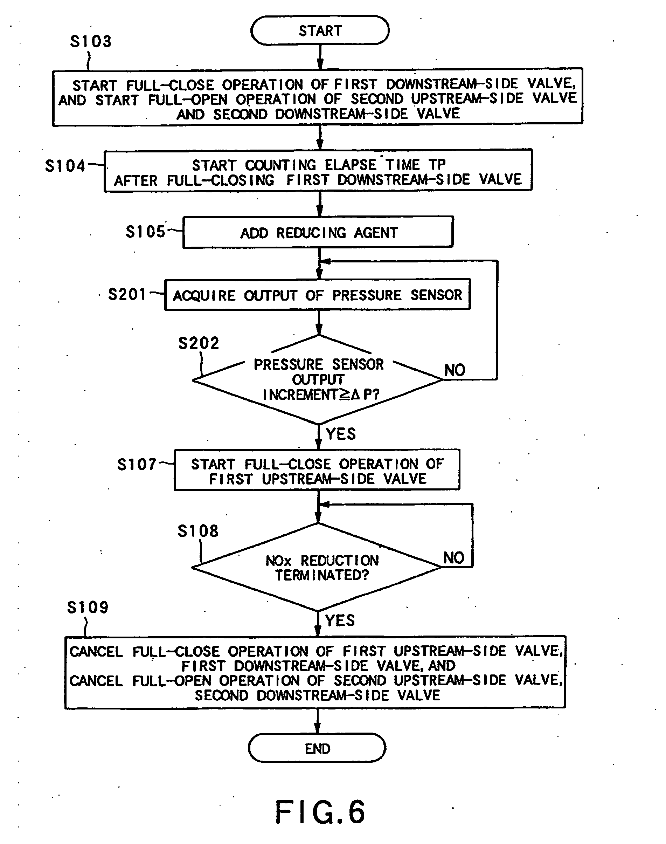

FIG. 6 shows a NOx reduction treatment routine according to this mode in the present embodiment. In this routine, a difference from the flowchart shown in FIG. 4 is omission of the processes in S101 and S102. Further, another difference is that processes in S201 and S202 replacing S106 are executed. Namely, after the fuel has been added from the first reducing agent adding valve 14a in S105, in S201, an output of the unillustrated pressure sensor is obtained, and it is judged in S202 whether or not an increment of the output of the pressure sensor is equal to or larger than the dispersion completion pressure difference ΔP. Herein, if the increment of the output of the pressure sensor is judged to be smaller than the dispersion completion pressure difference ΔP, it is judged that the fuel added from the first reducing agent adding valve 14a does not yet disperse throughout the whole of the first NOx catalyst 11a, and therefore the operation gets back to the process anterior to S201. Then, the output signal of the pressure sensor is again acquired in S201, and it is judged again in S202 whether or not the increment of the output of the pressure sensor is equal to or larger than the dispersion completion pressure difference ΔP.

Then, the processes in S201 and S202 are repeated till it is judged in S202 that the output of the pressure sensor is equal to or larger than the dispersion completion pressure difference ΔP. Subsequently, when judging in S202 that the output of the pressure sensor is equal to or larger than the dispersion completion pressure difference ΔP, it is judged that the fuel added from the first reducing agent adding valve 14a has dispersed throughout the whole of the first NOx catalyst 11a. Further, if the pressure rises higher than this level, it is judged that the NOx reduction efficiency might decline due to the excessive inflow of the oxygen. Accordingly, in this case, the operation advances to a process in S107.

As discussed so far, in this mode, the pressure sensor provided downstream of the first NOx catalyst 11a actually detects a pressure difference from the pressure before the full-close operation of the first downstream-side valve 13a, on the downstream side of the first NOx catalyst 11a and on the upstream side of the first downstream-side valve 13a. Then, by dint of this pressure difference it is judged that the fuel added from the first reducing agent adding valve 14a disperses throughout the whole of the first NOx catalyst 11a and that if the pressure rises higher than this level, the NOx reduction efficiency might decline due to the excessive inflow of the oxygen. Hence, the NOx reduction treatment can be completed more surely and more efficiently throughout the whole of the first NOx catalyst 11a.

Next, still another mode of the NOx reduction treatment in the present embodiment will be discussed. In this mode, after issuing the full-close operation command to the first downstream-side valve 13a and the full-open operation command to the second upstream-side valve 12a and the second downstream-side valve 13b, an air-fuel ratio of the exhaust gas on the downstream side of the first NOx catalyst 11a is monitored. Then, it is judged, from knowing that the monitored air-fuel ratio of the exhaust gas becomes equal to or lower than a predetermined air-fuel ratio, that the fuel as the reducing agent spreads out down to the downstream side of the first NOx catalyst 11a, whereby the full-close operation command is issued to the first upstream-side valve 12a.

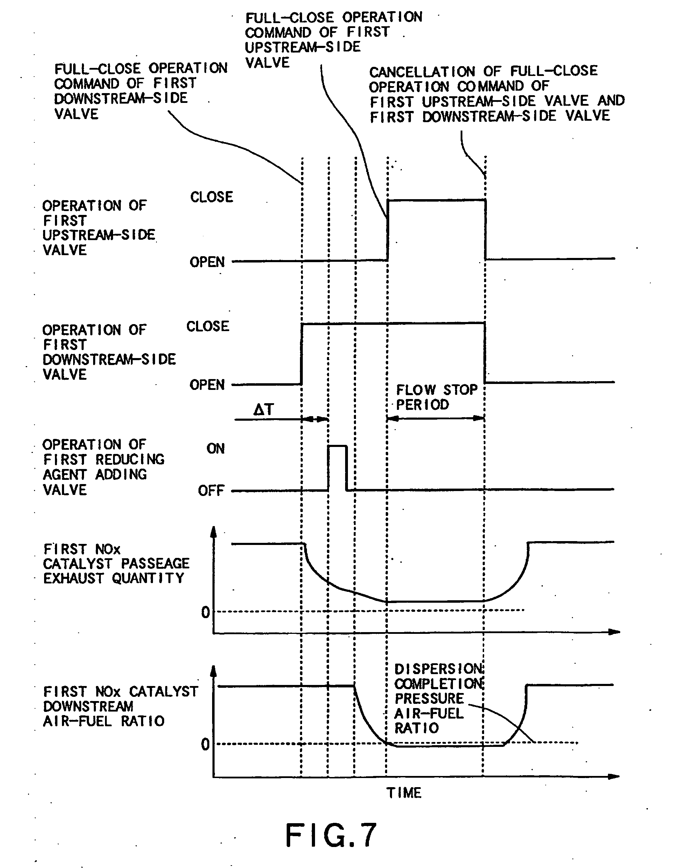

In this mode, on the first branch path 10a, an unillustrated air-fuel ratio sensor shall be provided downstream of the first NOx catalyst 11a and also upstream of the first downstream-side valve 13a. The operations of the first upstream-side valve 12a, the first downstream-side valve 13a and the first reducing agent adding valve 14a, the change in the quantity of the exhaust gas flowing via the first NOx catalyst 11a and a change in the air-fuel ratio on the downstream side of the first NOx catalyst 11a and on the upstream side of the first downstream-side valve 13a in this case, will be explained with reference to FIG. 7.

In FIG. 7, the opening/closing of the first upstream-side valve 12a, the opening/closing of the first downstream-side valve 13a, the ON-OFF of the first reducing agent adding valve 14a and the quantity of the exhaust gas flowing via the first NOx catalyst 11a, are the same as those shown in FIG. 3, and hence their explanations are omitted. Herein, as discussed above, the exhaust gas flowing through downstream of the first NOx catalyst 11a is blocked by the valve full-open operation of the first downstream-side valve 13a, with the result that the flow state of the exhaust gas changes. By this change, the fuel, which has dispersed on the upstream side of the first NOx catalyst 11a, further disperses to spread on the downstream side of the first NOx catalyst 11a. With this spread, the air-fuel ratio on the downstream side of the first NOx catalyst 11a and on the upstream side of the first downstream-side valve 13a, decreases.

It can be judged, from knowing that this air-fuel ratio gets equal to or smaller than the predetermined air-fuel ratio, that the fuel dispersing in the upstream-side portion of the first NOx catalyst 11a has further dispersed to spread throughout the whole of the first NOx catalyst 11a. Herein, the predetermined air-fuel ratio is an air-fuel ratio as a threshold value from which, if the air-fuel ratio on the downstream side of the first NOx catalyst 11a and on the upstream side of the first downstream-side valve 13a becomes equal to or smaller than this value, the fuel dispersing in the upstream-side portion of the first NOx catalyst 11a can be judged to have further dispersed to spread throughout the whole of the first NOx catalyst 11a, and may also be empirically acquired beforehand.

In this mode, by knowing that after the full-close operation of the first downstream-side valve 13a, the air-fuel ratio on the downstream side of the first NOx catalyst 11a and on the upstream side of the first downstream-side valve 13a becomes equal to or smaller than a dispersion completion air-fuel ratio AFD, it is judged that the added fuel disperses throughout the whole of the first NOx catalyst 11a, and the full-close operation command is issued to the first upstream-side valve 12a.

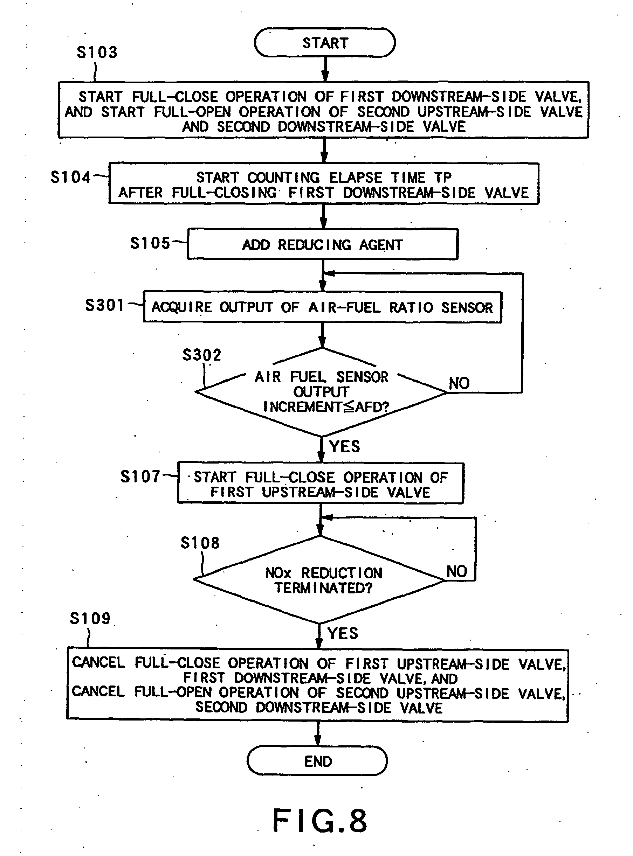

FIG. 8 shows a NOx reduction treatment routine in this mode according to the present embodiment. In this routine, a difference from the flowchart shown in FIG. 4 is omission of the processes in S101 and S102. Further, another difference is that processes in S301 and S302 replacing S106 are executed. Namely, after the fuel has been added from the first reducing agent adding valve 14a in S105, in S301, an output of the unillustrated air-fuel ratio sensor is obtained, and it is judged in S302 whether or not a value of the output of the air-duel ratio sensor is equal to or smaller than the dispersion completion air-duel ratio AFD.

Then, in S302, in the case of judging that the obtained output signal is equal to or smaller than the dispersion completion air-duel ratio AFD, it is judged that the fuel added from the first reducing agent adding means 14a has dispersed throughout the whole of the first NOx catalyst 11a, and the operation advances to the process in S107.

As discussed so far, in this mode, the air-fuel ratio sensor provided downstream of the first NOx catalyst 11a and also upstream of the first downstream-side valve 13a actually detects the air-fuel ratio on the downstream side of the first NOx catalyst 11a and on the upstream side of the first downstream-side valve 13a. Then, the fuel added from the first reducing agent adding valve 14a is judged to have dispersed throughout the whole of the first NOx catalyst 11a. Hence, the NOx reduction treatment can be completed more surely over the whole of the first NOx catalyst 11a.

What has been discussed in the present embodiment is mainly about how the first upstream-side valve 12a, the first downstream-side valve 13a and the first reducing agent adding valve 14a are controlled in the NOx reduction treatment with respect to the first NOx catalyst 11a. In the NOx reduction treatment for the second NOx catalyst 11b, however, the same control may be conducted for the second upstream-side valve 12b, the second downstream-side valve 13b and the second reducing agent adding valve 14b. In the following discussion also, only an example of executing the NOx reduction treatment for the first NOx catalyst 11a is explained, however, the same control can be applied on the occasion of effecting the NOx reduction treatment for the second NOx catalyst 11b.

### <SECOND EMBODIMENT>

Next, a second embodiment of the present invention will be described. The second embodiment will exemplify an example, wherein on the occasion of starting the NOx reduction treatment, the full-close operation command is simultaneously issued to the first upstream-side valve 12a and the first downstream-side valve 13a, at an end of the flow stop period, to begin with, the full-close operation of the first upstream-side valve 12a is canceled, and, just when predetermined open delay time ΔTO elapses, the full-close operation of the first downstream-side valve 13a is canceled. Note that the internal combustion engine 1 and the exhaust system and the intake system thereof are the same as those shown in FIG. 1, and hence their descriptions are omitted.

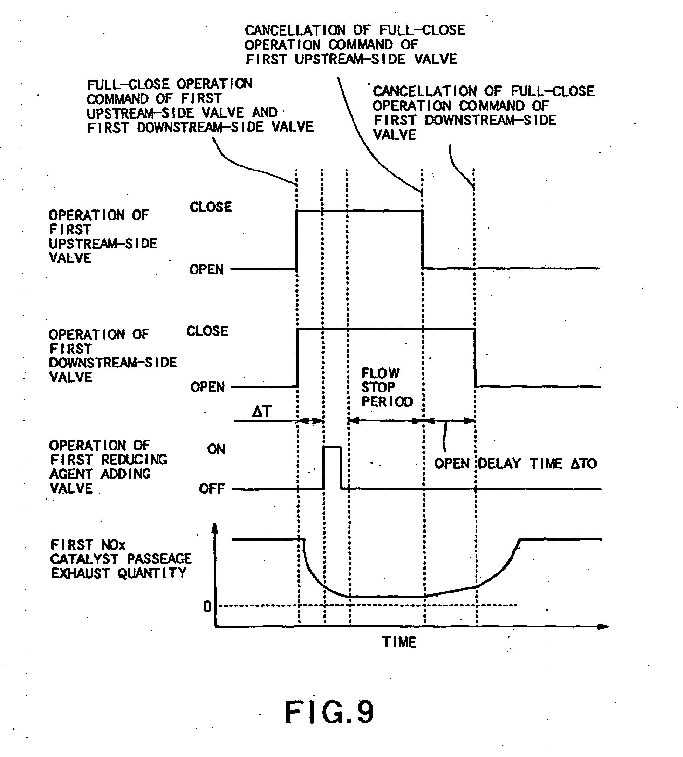

FIG. 9 is a time chart that shows the opening/closing of the first upstream-side valve 12a, the opening/closing of the first downstream-side valve 13a, the ON-OFF of the first reducing agent adding valve 14a and the change in the quantity of the exhaust gas flowing via the first NOx catalyst 11a in this embodiment, wherein the axis of abscissa represents the time.

As shown in FIG. 9, in this embodiment, when starting the NOx reduction treatment, the full-close operation command is issued simultaneously to the first upstream-side valve 12a and the first downstream-side valve 13a. At this point of time, there decrease both of the quantity of the exhaust gas flowing through upstream of the first NOx catalyst and the quantity of the exhaust gas flowing through downstream of the first NOx catalyst, and consequently the quantity the exhaust gas flowing through the first NOx catalyst 11 decreases. Thereafter, when the predetermined delay time ΔT elapses, the fuel is added from the first reducing agent adding valve 14a. Then, the quantity of the exhaust gas flowing through the first NOx catalyst 11a becomes substantially zero, and, just when reaching the flow stop period, the fuel discharged from the first reducing agent adding valve 14a disperses in the upstream-side portion of the first NOx catalyst 11a.

Thereafter, this state is kept till an elapse of the predetermined flow stop period. Thereupon, the NOx reducing reaction about the portion where the fuel disperses in the first NOx catalyst 11a, sufficiently advances. Next, the full-close operation of only the first upstream-side valve 12a is canceled. Then, there changes the flow state of the exhaust gas flowing through the first NOx catalyst 11a. To be specific, a new exhaust gas flows in from the upstream side of the first NOx catalyst 11a. With this change, the fuel, which has dispersed partially in the first NOx catalyst 11a, further disperses to spread throughout the whole of the first NOx catalyst 11a. Then, further in this state, the NOx reducing reaction occurs in the whole of the first NOx catalyst 11a.

Herein, the open delay time ΔTO is defined as a period of time till the fuel dispersing partially in the first NOx catalyst 11a is dispersed to spread throughout the whole of the first NOx catalyst 11a due to the change in the flow state of the exhaust gas, and, in this state, the NOx reducing reaction terminates over the whole of the first NOx catalyst 11a, and is empirically obtained. Then, at a point of time when the open delay time ΔTO elapses since the first upstream-side valve 12a has opened, the full-close operation of the first downstream-side valve 13a is canceled.

By such an operation, the NOx reduction treatment can be sufficiently completed over the whole of the NOx catalyst 11a. Note that the open delay time ΔTO may be set shorter with a larger intake air quantity into the internal combustion engine 1 at that point of time and may also be set shorter with a higher exhaust temperature of the exhaust gas flowing through the first NOx catalyst 11a, which is the same with the cutoff delay time ΔTS in the first embodiment. Further, the open delay time ΔTO is affected by the change in the operation state of the internal combustion engine 1.

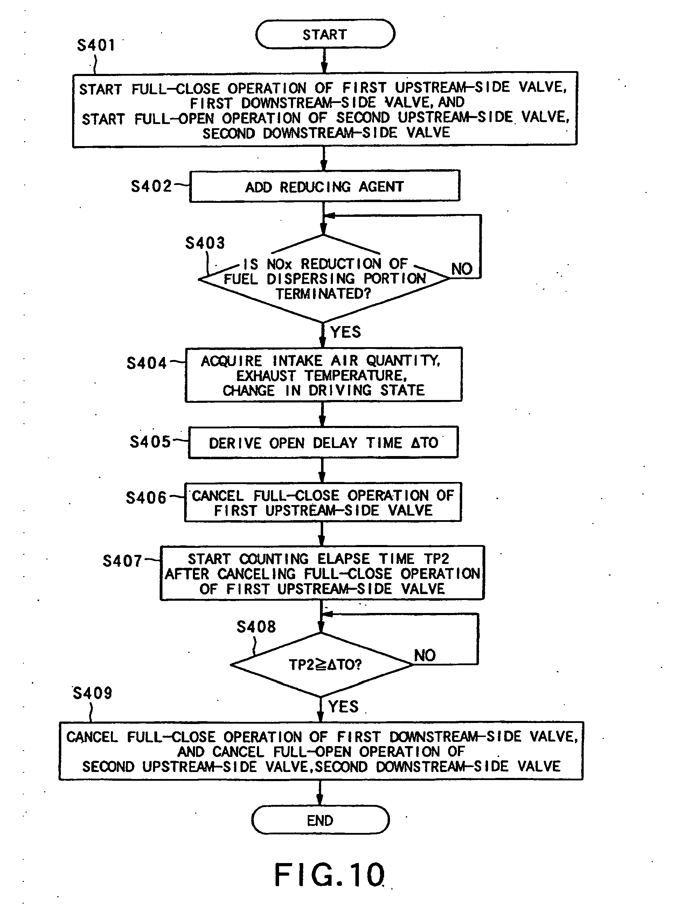

FIG. 10 shows a NOx reduction treatment routine in the second embodiment.

Upon execution of this routine, to start with, in S401, the full-close operation command is simultaneously issued to the first upstream-side valve 12a and the first downstream-side valve 13a, and the full-open operation command is issued to the second upstream-side valve 12b and the second downstream-side valve 13b. When finishing the process in S401, the operation advances to S402.

Next, going forward to S402, the fuel is added from the first reducing agent adding valve 14a. The details of this process are the same as the process in S105 in FIG. 4. By this process, the fuel as the reducing agent disperses in the upstream-side portion of the first NOx catalyst 11a. Upon an end of the process in S402, the operation advances to S403.

In S403, in the portion, in which to disperse the fuel added from the first reducing agent adding valve 14a, of the first NOx catalyst 11a, it is judged whether the NOx reducing reaction terminates or not. The judgment that the NOx reducing reaction terminates, may be done from knowing that the empirically pre-obtained NOx reduction time elapses. In S403, in the case of judging that the NOx reducing reaction does not terminate. The operation gets back to the process before S403, wherein it is judged again in S403 whether the NOx reducing reaction terminates or not. Then, in S403, this process is repeated till the NOx reducing reaction is judged to have terminated. Then, in S403, if it is judged that the NOx reducing reaction terminates, the operation advances to a process in S404

In S404, the intake air quantity into the internal combustion engine 1, the exhaust temperature of the exhaust gas flowing through the first NOx catalyst 11a and a change in the operation state of the internal combustion engine 1, are acquired. The details of the way of acquiring the intake air quantity into the internal combustion engine

1 and the exhaust temperature of the exhaust gas flowing through the first NOx catalyst 11a are the same as those explained in S101 in FIG. 4. Further, the change in the operation state of the internal combustion engine 1 may be acquired by the ECU 35 that reads an output signal of an unillustrated accelerator position sensor and an output signal of a crank position sensor.

In S405, the open delay time ΔTO is derived. Specifically, the open delay time ΔTO is derived by reading the open delay time ΔTO associated with respective pieces of parameter data acquired in S404 from a map created in a way that empirically obtains beforehand a relationship between the intake air quantity into the internal combustion engine 1, the exhaust temperature of the exhaust gas flowing through the first NOx catalyst 11a, the change in the operation state of the internal combustion engine 1 and the open delay time ΔTO. When finishing the process in S405, the operation advances to S406.

In S406, the full-close operation of the first upstream-side valve 12a is canceled. With this cancellation, there changes the flow state of the exhaust gas within the first NOx catalyst 11a. Then, the fuel dispersing on the upstream side of the first NOx catalyst 11a spreads on the downstream side, and further disperses to spread throughout the whole of the first NOx catalyst 11a.

In S407, for detecting an elapse of the open delay time ΔTO, counting of elapse time TP2 since the cancellation of the full-close operation of the first upstream-side valve 12a, is started. Upon an end of the process in S407, the operation advances to S408.

In S408, it is judged whether or not the elapse time TP2 since the cancellation of the full-close operation of the first upstream-side valve 12a is equal to or longer than the open delay time ΔTO. Herein, when judging that the elapse time TP2 since the cancellation of the full-close operation of the first upstream-side valve 12a is less than the open delay time ΔTO, the operation returns to the process anterior to this process, and again in the present process, it is judged whether or not the elapse time TP2 is equal to or longer than the open delay time ΔTO. Then, this process is repeated till it is judged in the present process that the elapse time TP2 is equal to or longer than the open delay time ΔTO. While on the other hand, when judging that the elapse time TP2 is equal to or longer than the open delay time ΔTO, the operation advances to S409. In other words, after waiting for the open delay time ΔTO to elapse since the first upstream-side valve 12a has opened, the operation advances to S409.

In S409, the full-close operation of the first downstream-side valve 13a is canceled, and the full-open operation command to the second upstream-side valve 12b and the second downstream-side valve 13b is also canceled. Upon an end of the process in S409, the present routine is temporarily finished.

As described above, in the second embodiment, when starting the NOx reduction treatment, the quantity of the exhaust gas flowing through the first NOx catalyst 11a is set substantially zero by issuing the full-close operation command to both of the first upstream-side valve 12a and the first downstream-side valve 13a. Moreover, at this point of time, the fuel is added at such timing that the fuel added from the first reducing agent adding valve 14a is distributed over the upstream-side portion in the first NOx catalyst 11a.

Then, at the timing of terminating the NOx reducing reaction in the upstream-side portion in the first NOx catalyst 11a, the full-close operation of only the first upstream-side valve 12a is canceled. With this cancellation, the state of the exhaust gas flow caused on this occasion is changed, and the fuel dispersing in the upstream-side portion in the first NOx catalyst 11a, is further dispersed to spread throughout the whole of the first NOx catalyst 11a. Then, this state is maintained till the termination of the NOx reduction treatment in the whole of the first NOx catalyst 11a, and thereafter the full-close operation of the first downstream-side valve 13a is canceled.

Accordingly, after the fuel added from the first reducing agent adding valve 14a has been dispersed more surely over the whole of the first NOx catalyst 11a, the NOx reduction treatment in the whole of the first NOx catalyst 11a can be completed with more of certainty.

In the discussion on the second embodiment given above, the period till the cancellation of the full-close operation of the first downstream-side valve 13a since the cancellation of the full-close operation of only the first upstream-side valve 12a, is set to the pre-derived open delay time ΔTO. By contrast, however, as explained in the second and third modes in the first embodiment, the pressure sensor or the air-fuel ratio sensor is provided downstream of the first NOx catalyst 11a, and it may be judged, from knowing that the output value of the pressure sensor becomes equal to or larger than the predetermined pressure or knowing that the output value of the air-fuel ratio sensor becomes equal to or smaller than the predetermined air-fuel ratio, that the fuel has dispersed throughout the whole of the first NOx catalyst 11a. Further, thereafter, it is waited till the NOx reducing reaction in the NOx catalyst 11a terminates, and the full-close operation of the first downstream-side valve 13a may also be canceled.

Herein, the premise in the present embodiment discussed above is that when the full-close operation of the first upstream-side valve 12a is canceled, the exhaust gas flows in from the upstream side of the first upstream-side valve 12a. Depending on the change in the operation state of the internal combustion engine 1, however, it is considered that when the full-close operation of the first upstream-side valve 12a is canceled, the exhaust gas does not flow in from the upstream side of the first upstream-side valve 12a. For example, there might be a case, wherein just when the first upstream-side valve 12a opens, the operation state of the internal combustion engine 1 comes to a low-load/low-engine-speed state with a small quantity of exhaust gas, and therefore, on the occasion of opening the first upstream-side valve 12a, conversely the exhaust gas flows out toward the upstream side from the downstream side of the first upstream-side valve 12a, and so on.

In such a case, when the first upstream-side valve 12a opens, the fuel dispersing in the upstream-side portion of the first NOx catalyst 11a does not spread on the downstream side, and might possibly further escape on the upstream side.

Hence, in S406 in the present embodiment, the first upstream-side valve 12a may be opened only when judging that the exhaust gas flows into an area between the first upstream-side valve 12a and the first downstream-side valve 13a from the upstream side of the first upstream-side valve 12a, on the occasion of opening the first upstream-side valve 12a, from the change in the operation state that is acquired in S404.

Further, in the present embodiment, if it.is judged that the exhaust gas does not sufficiently flow in from the upstream side of the first upstream-side valve 12a when opening the first upstream-side valve 12a from the change in the operation state that is acquired in S404, the full-open operation of the second upstream-side valve 12b or the second downstream-side valve 13b may be canceled. If done so, the exhaust gas can be forcibly flowed in toward the downstream side from the upstream side of the first upstream-side valve 12a.

In the second embodiment, the control is performed such that the fuel added from the first reducing agent adding valve 14a is dispersed in the upstream-side portion of the first NOx catalyst 11a at an initial stage of the flow stop period, and is further made to disperse on the downstream side by canceling the full-close operation of the first upstream-side valve 12a. Other than this control, however, another control may be conducted such that the fuel added from the first reducing agent adding valve 14a is dispersed in the downstream-side portion of the first NOx catalyst 11a at the initial stage of the flow stop period, and the full-close operation of the first downstream-side valve 13a is canceled. With such an operation done, the exhaust gas is flowed round into the area between the first upstream-side valve 12a and the first downstream-side valve 13a from the downstream side of the first downstream-side valve 13a, and the fuel dispersing in the downstream-side portion of the first NOx catalyst 11a can be further dispersed on the upstream side of the first NOx catalyst 11a. Moreover, these types of control described above may also be separately employed depending on the conditions such as the operation state of the internal combustion engine 1.

### <THIRD EMBODIMENT>

Next, a third embodiment of the present invention will be described. The third embodiment will exemplify an example of dispersing the fuel more uniformly throughout the first NOx catalyst 11a by performing the opening/closing operation of the first upstream-side valve 12a once or more while keeping the first downstream-side valve 13a in the full-close state in the course of the NOx reduction treatment.

The internal combustion engine 1, and the exhaust system and the intake system thereof in the third embodiment are the same as those shown in FIG. 1, and hence their explanations are omitted.

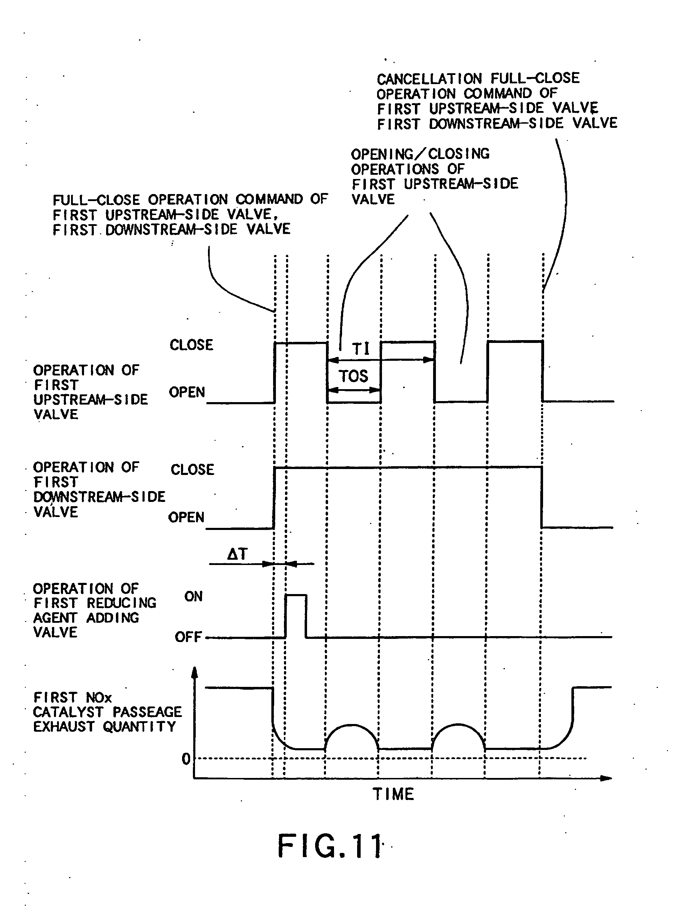

FIG. 11 is a time chart that shows the opening/closing of the first upstream-side valve 12a, the opening/closing of the first downstream-side valve 13a, the ON-OFF of the first reducing agent adding valve 14a and the quantity of the exhaust gas flowing via the first NOx catalyst 11a in the third embodiment, wherein the axis of abscissa represents the time.

As shown in FIG. 11, in the third embodiment, when starting the NOx reduction treatment, the full-close operation command is issued almost simultaneously to the first upstream-side valve 12a and the first downstream-side valve 13a. With this operation, there decreases the quantity of the exhaust gas flowing through upstream of the first NOx catalyst. Thereafter, just when the predetermined delay time ΔT elapses, the fuel is added from the first reducing agent adding valve 14a. Then, the quantity of the exhaust gas flowing through the first NOx catalyst 11a gets substantially minimized (approximately zero), and, just when reaching the flow stop period, the fuel discharged from the first reducing agent adding valve 14a disperses in the upstream-side portion of the first NOx catalyst 11a.

Thereafter, the opening/closing operation of the first upstream-side valve 12a is repeated at a predetermined interval while keeping the full-close state of the first downstream-side valve 13a. Thereupon, the fuel, which has dispersed in the upstream-side portion of the first NOx catalyst 11a, as the flow state of the exhaust gas changes due to the opening/closing operation of the first upstream-side valve 12a, disperses to spread gradually on the downstream side. Then, in the meantime, the NOx reducing reaction advances in the portion where the fuel disperses in the first NOx catalyst 11a.

Then, the fuel disperses throughout the whole of the first NOx catalyst 11a, and the opening/closing operation of the first upstream-side valve 12a is repeated till the termination of the NOx reducing reaction over the whole of the first NOx catalyst 11a.

Herein, valve opening time TOS of the first upstream-side valve 12a, an opening/closing operation interval TI and an opening/closing operation count NOS are empirically obtained beforehand as parameters used for the fuel dispersing the upstream-side portion of the first NOx catalyst 11a to further disperse so as to spread on the downstream side and further for the NOx reducing reaction, in this state, to terminate over the whole of the first NOx catalyst 11a. Then, the NOx reduction treatment is started, and, after closing the first upstream-side valve 12a and the first downstream-side valve 13a, the opening/closing operation of the first upstream-side valve 12a is conducted based on the valve opening time TOS, the opening/closing operation interval TI and the opening/closing operation count NOS.

It is to be noted that the valve opening time TOS of the first upstream-side valve 12a in the opening/closing operation should be set shorter with a higher exhaust temperature of the exhaust gas flowing through the first NOx catalyst 11a and also set shorter with a larger intake air quantity into the internal combustion engine 1. Moreover, the valve closing time of the first upstream-side valve 12a in the opening/closing operation should be set shorter with a less reduction quantity requested of the first NOx catalyst 11a and also set shorter with a higher bed temperature of the first NOx catalyst 11a. Accordingly, the opening/closing operation interval TI should be determined from this condition. Furthermore, the opening/closing operation count NOS should be set smaller with the larger intake air quantity into the internal combustion engine 1 and also set smaller with the higher bed temperature of the first NOx catalyst 11a or the higher exhaust temperature of the exhaust gas flowing through the first NOx catalyst 11a. Hence, a relationship between the intake air quantity into the internal combustion engine 1, the bed temperature of the first NOx catalyst 11a, the exhaust temperature of the exhaust gas flowing through the first NOx catalyst 11a, the reduction quantity requested of the first NOx catalyst 11a, the valve opening time TOS of the first upstream-side valve 12a, the opening/closing operation interval TI and the opening/closing operation count NOS, is mapped previously, whereby the parameters thereof may also be determined by reading these parameter from the map.

With this contrivance, the NOx reduction treatment can be completed throughout the whole of the first NOx catalyst 11a.

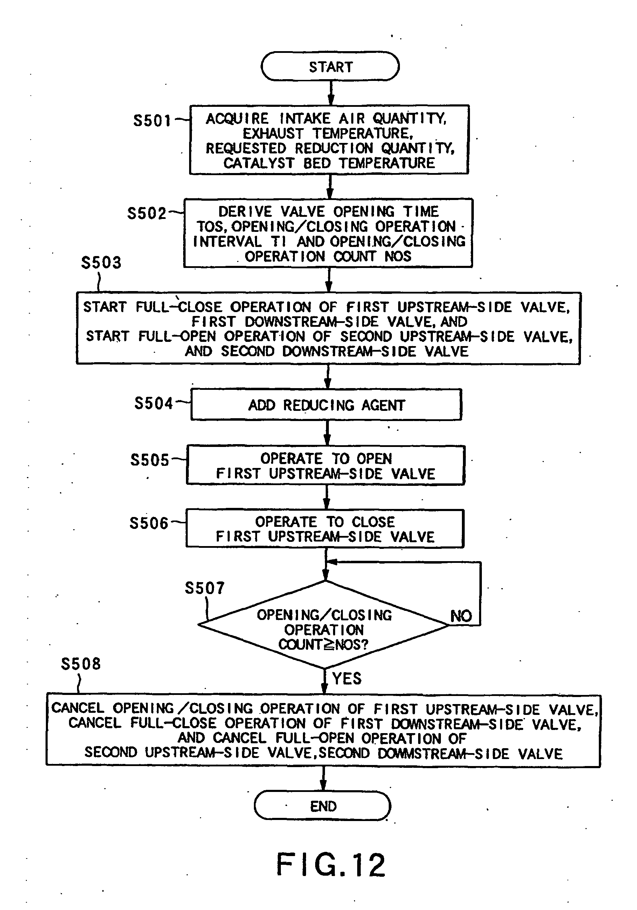

FIG. 12 shows a NOx reduction treatment routine in the third embodiment.

When executing this routine, to begin with, in S501, there are acquired the intake air quantity into the internal combustion engine 1, the exhaust temperature of the exhaust gas flowing through the first NOx catalyst 11a, a reduction quantity requested of the first N0x catalyst 11a and a catalyst bed temperature of the first NOx catalyst 11a. A method of acquiring the intake air quantity into the internal combustion engine 1 and the exhaust temperature of the exhaust gas flowing through the first NOx catalyst 11a, is the same as the method explained in S101 in FIG. 4. The reduction quantity requested of the first NOx catalyst 11a may be derived from the operation time of the internal combustion engine 1 and from the mileage (the traveling distance) of the vehicle as those after the'end of the NOx reduction treatment executed last time, and may also be derived from an output of an unillustrated NOx sensor provided downstream of the first NOx catalyst 11a. The catalyst bed temperature of the first NOx catalyst 11a may be detected from an output of an unillustrated temperature sensor provided downstream of the first NOx catalyst 11a

Next, the operation advances to S502, wherein the valve opening time TOS of the first upstream-side valve 12a, the opening/closing operation interval TI and the opening/closing operation count NOS are derived. To be specific, the valve opening time TOS is read from a map stored with a relationship between the intake air quantity, the exhaust temperature and the valve opening time TOS, while the opening/closing operation count NOS is read from a map stored with a relationship between the intake air quantity, the exhaust temperature and the opening/closing operation count NOS. Moreover, the opening/closing operation interval TI is read from a map stored with a relationship between the requested reduction quantity, the bed temperature of the first NOx catalyst 11a and the opening/closing operation interval TI.

Next, the operation advances to S503, wherein the full-close operation command is issued to the first upstream-side valve 12a and the first downstream-side valve 13a, and the full-open operation command is issued to the second upstream-side valve 12b and the second downstream-side valve 13b.

Then, in S504, the fuel is added from the first reducing agent adding valve 14a into the exhaust gas flowing via the first branch path 10a. Thereafter, it follows that almost the whole of the exhaust gas from the internal combustion engine 1 passes through the second branch path 10b, and the quantity of the flowing through the first NOx catalyst 11a becomes approximately zero. At this point of time, the fuel added from the first reducing agent adding valve 14a disperses in the upstream-side portion of the first NOx catalyst 11a.

Next, in S505, the valve opening operation of the first upstream-side valve 12a is carried out. In this case, the first downstream-side valve 13a has already been closed, and hence the first downstream-side valve 13a continues to be in the valve-close state. By the valve opening operation of the first upstream-side valve 12a, there changes the flow state of the exhaust gas in the area between the first upstream-side valve 12a and the first downstream-side valve 13a, and the fuel, which has dispersed in the upstream-side portion of the first NOx catalyst 11a, disperses to spread more downstream. Upon an end of the process in S505, the operation proceeds to S506.

In S506, the valve-close operation of the first upstream-side valve 12a is conducted. With the valve closing operation of the first upstream-side valve 12a, the spread of the dispersion of the fuel described above is halted. Hereat, an interval between the process in S505 and the process in S506 is the valve opening time TOS.

Then, it is judged whether or not the opening/closing operation count of the first upstream-side valve 12a after issuing the full-close operation command to the first upstream-side valve 12a and the first downstream-side valve 13a, is equal to or larger NOS. Herein, if the opening/closing operation count of the first upstream-side valve 12a is less than NOS, the operation gets back to the process anterior to S505. Then, there are again conducted the valve opening operation of the first upstream-side valve 12a in S505 and the valve closing operation of the first upstream-side valve 12a in S506. Then, in S507, the processes in S505 through S507 are repeated till it is judged that the opening/closing operation count of the first upstream-side valve 12a after issuing the full-close operation command to the first upstream-side valve 12a and the first downstream-side valve 13a in S503, is equal to or larger than NOS. Note that an interval till the process in S505 is started next time since the process in S505 has been once started, is an opening/closing operation interval TI.

In S507, in the case of judging that the opening/closing operation count of the first upstream-side valve 12a after issuing the full-close operation command to the first upstream-side valve 12a and the first downstream-side valve 13a is equal to or larger NOS, the operation advances to S508. This is because it is judged that the fuel added from the first reducing agent adding valve 14a disperses throughout the whole of the first NOx catalyst 11a and the NOx reducing reaction terminates in the whole of the first NOx catalyst 11a.

In S508, the opening/closing operation of the first upstream-side valve 12a is canceled, and there are canceled the full-close operation of the first downstream-side valve 13a and the full-open operations of the second upstream-side valve 12b and of the second downstream-side valve 13b. Then, the present routine is temporarily finished.

As discussed so far, in the third embodiment, on the occasion of executing the NOx reduction treatment, the first downstream-side valve 13a is kept in the full-close state, and the opening/closing operation of the first upstream-side valve 12a is performed. Such operations being done so, the flow state of the exhaust gas in the first NOx catalyst 11a is intermittently changed, and the fuel dispersing in the upstream-side portion of the first NOx catalyst 11a is then dispersed little by little on the downstream side while the NOx reducing reaction continues. With this operation, the NOx reducing reaction is terminated over the whole of the first NOx catalyst 11a.

Accordingly, the NOx reduction treatment can be completed more surely throughout the whole of the first NOx catalyst 11a.

Further, in the third embodiment, the valve opening time TOS of the first upstream-side valve 12a, the opening/closing operation interval TI and the opening/closing operation count NOS are derived beforehand from the pre-created map, and the first upstream-side valve 12a is opened and closed till the opening/closing operation count reaches NOS. The setting may, however, also be done such that the opening/closing operation count NOS is not predetermined, the air-fuel ratio sensor is provided downstream of the first NOx catalyst 11a, and the opening/closing operation with the valve opening time TOS and at the opening/closing interval TI may continue till the output signal of the air-fuel ratio sensor becomes equal to or smaller than a predetermined value. Alternatively, the opening/closing operation with the valve opening time TOS and at the opening/closing interval TI may continue till the output signal of the air-fuel ratio sensor becomes equal to or smaller than the predetermined value and till the predetermined time elapses.

Further, in the third embodiment, immediately after the full-close operations of the first upstream-side valve 12a and the first downstream-side valve 13a, the fuel added from the first reducing agent adding valve 14a is dispersed in the upstream-side portion of the first NOx catalyst 11a. Then, the fuel is dispersed on the downstream side along with the opening/closing operation of the first upstream-side valve 12a. Other than this configuration, the third embodiment can be applied to a configuration wherein the first branch path 10a is provided with a plurality of NOx catalysts 11a.

For example, it is considered that, on the first branch path 10a, an unillustrated auxiliary first downstream-side NOx catalyst is provided on the upstream side of the first downstream-side valve 13a as well as on the downstream side of the first NOx catalyst 11a. In such a case, immediately after the full-close operations of the first upstream-side valve 12a and the first downstream-side valve 13a, the fuel added from the first reducing agent adding valve 14a is dispersed in only the first NOx catalyst 11a, and this fuel may be dispersed also in the first downstream-side NOx catalyst along with the opening/closing operation of the first upstream-side valve 12a.

Further, in the third embodiment also, similarly to what has been discussed in the second embodiment, in the case of performing the opening/closing operation of the first upstream-side valve 12a, only when judging that the exhaust gas flows in on the downstream side from the upstream side of the first upstream-side valve 12a, the opening/closing operation of the first upstream-side valve 12 may be conducted.

Moreover, in the third embodiment also, similarly to what has been discussed in the second embodiment, in the case of performing the opening/closing operation of the first upstream-side valve 12a, when judging that the exhaust gas does not sufficiently flow in on the downstream side from the upstream side of the first upstream-side valve 12a, the second upstream-side valve 12b or the second downstream-side valve 13b may be opened by canceling the full-open operation. If done so, the exhaust gas can be flowed in on the downstream side from the upstream side of the first upstream-side valve 12a.

Further, in the third embodiment also, similarly to what has been discussed in the second embodiment, the control is done such that the fuel added from the first reducing agent adding valve 14a is, immediately after starting the NOx reduction treatment, dispersed in the upstream-side portion of the first NOx catalyst 11a and further dispersed on the downstream side by the opening/closing operation of the first upstream-side valve 12a. By contrast, for instance, the fuel added from the first reducing agent adding valve 14a may be, immediately after starting the NOx reduction treatment, dispersed in the downstream-side portion of the first NOx catalyst 11a, and the opening/closing operation of the first downstream-side valve 13a may be conducted. Under this control, the exhaust gas can be flowed round toward the upstream side from the downstream side of the first downstream-side valve 13a, and the fuel dispersing in the downstream side portion of the first NOx catalyst 11a can be further dispersed on the upstream side of the first NOx catalyst 11a. These types of control may be separately employed depending on the condition such as the operation state of the internal combustion engine 1.

It should be noted that the control explained in the embodiments discussed above can be applied to a so-called SOx poisoning recovery treatment of the occlusion reduction type NOx catalyst and to a PM (Particulate Matter) reproducing process in a filter (particulate filter) for capturing (trapping) the particulates in the exhaust gas.

## Claims

1. An exhaust gas purification system of an internal combustion engine, comprising:
an occlusion reduction type NOx catalyst (11a, 11b) disposed on an exhaust path (5) of an internal combustion engine (1), purifying NOx in the exhaust gas, and recovering a NOx purifying capacity by a NOx reduction treatment;
reducing agent adding means (14a, 14b) disposed on an upstream side of said occlusion reduction type NOx catalyst (11a, 11b) on the exhaust path (5) and adding a reducing agent into the exhaust gas;
**characterized by**
upstream-side exhaust quantity adjusting means (12a, 12b) disposed upstream of said reducing agent adding means (14a, 14b) on the exhaust path (5), and adjusting a quantity of the exhaust gas flowing through upstream of said occlusion reduction type NOx catalyst (11a, 11b); and
downstream-side exhaust quantity adjusting means (13a, 13b) disposed downstream of said occlusion reduction type NOx catalyst (11a, 11b) on the exhaust path (5), and adjusting a quantity of the exhaust gas flowing through downstream of said occlusion reduction type NOx catalyst (11a, 11b),
wherein when executing the NOx reduction treatment of said occlusion reduction type NOx catalyst (11a, 11b) at least said downstream-side exhaust quantity adjusting means (13a, 13b) decreases the quantity of the exhaust gas flowing through downstream of said occlusion reduction type NOx catalyst (11a, 11b), and said reducing agent adding means (14a, 14b) adds the reducing agent into the exhaust gas, and
in a state where the quantity of the exhaust gas flowing through downstream of said occlusion reduction type NOx catalyst (11a, 11b) is decreased and the reducing agent added from said reducing agent adding means (14a, 14b) being dispersed within said occlusion reduction type NOx catalyst (11a, 11b), said upstream-side exhaust quantity adjusting means (12a, 12b) changes the quantity of the exhaust gas flowing through upstream of said occlusion reduction type NOx catalyst (11a, 11b).

2. An exhaust gas purification system of an internal combustion engine according to claim 1, wherein in a state where the quantity of the exhaust gas flowing through downstream of said occlusion reduction type NOx catalyst (11a, 11b) is decreased and the reducing agent added from said reducing agent adding means (14a, 14b) being dispersed within said occlusion reduction type NOx catalyst (11a, 11b), said upstream-side exhaust quantity adjusting means (12a, 12b) performs an increasing/decreasing operation, once or more, or temporarily increasing and then decreasing the quantity of the exhaust gas flowing through upstream of said occlusion reduction type NOx catalyst (11a, 11b),

3. An exhaust gas purification system of an internal combustion engine according to claim 1 or 2, further comprising a bypath (10b, 10a) for bypassing the exhaust gas to said occlusion reduction type NOx catalyst (11a, 11b), the upstream-side exhaust quantity adjusting means (12a, 12b), and the downstream-side exhaust quantity adjusting means (13a, 13b),
wherein when said upstream-side exhaust quantity adjusting means (12a, 12b) decreases the quantity of the exhaust gas flowing through upstream of said occlusion reduction type NOx catalyst (11a, 11b) and when said downstream-side exhaust quantity adjusting means (13a, 13b) decreases the quantity of the exhaust gas flowing through downstream of said occlusion reduction type NOx catalyst (11a, 11b), at least part of the exhaust gas flows through said bypath (10b, 10a).

4. An exhaust gas purification system of an internal combustion engine according to claim 1, further comprising pressure detecting means disposed downstream of said occlusion reduction type NOx catalyst (11a, 11b) and detecting a pressure, on the downstream side of said occlusion reduction type NOx catalyst (11a, 11b), in the exhaust path (5),
wherein in a state where the quantity of the exhaust gas flowing through downstream of said occlusion reduction type NOx catalyst (11a, 11b) is decreased and the reducing agent added from said reducing agent adding means (14a, 14b) being dispersed within said occlusion reduction type NOx catalyst (11a, 11b), if the pressure detected by said pressure detecting means is equal to or higher than a predetermined pressure, said upstream-side exhaust quantity adjusting means (12a, 12b) decreases the quantity of the exhaust gas flowing through upstream of said occlusion reduction type NOx catalyst (11a, 11b).

5. An exhaust gas purification system of an internal combustion engine according to claim 1, further comprising concentration detecting means disposed downstream of said occlusion reduction type NOx catalyst (11a, 11b) and detecting a concentration of a specified component in the exhaust gas flowing through downstream of said occlusion reduction type NOx catalyst (11a, 11b),
wherein in a state where the quantity of the exhaust gas flowing through downstream of said occlusion reduction type NOx catalyst (11a, 11b) is decreased and the reducing agent added from said reducing agent adding means (14a, 14b) being dispersed within said occlusion reduction type NOx catalyst (11a, 11b), if the concentration of the specified component in the exhaust gas that is detected by said concentration detecting means reaches a predetermined concentration, said upstream-side exhaust quantity adjusting means (12a, 12b) decreases the quantity of the exhaust gas flowing through upstream of said occlusion reduction type NOx catalyst (11a, 11b).

6. An exhaust gas purification system of an internal combustion engine according to claim 3, further comprising bypath exhaust quantity adjusting means (12b, 13b, 12a, 13a) provided in said bypath (10b, 10a) and adjusting a quantity of the exhaust gas flowing through said bypath (10b, 10a),
wherein in a state where the quantity of the exhaust gas flowing through downstream of said occlusion reduction type NOx catalyst (11a, 11b) is decreased and the reducing agent added from said reducing agent adding means (14a, 14b) being dispersed within said occlusion reduction type NOx catalyst (11a, 11b), said upstream-side exhaust quantity adjusting means (12a, 12b) changes the quantity of the exhaust gas flowing through upstream of said occlusion reduction type NOx catalyst (11a, 11b), and said bypath exhaust quantity adjusting means (12b, 13b, 12a, 13a) changes the quantity of the exhaust gas flowing through said bypath (10b, 10a).

## Patentansprüche

1. Abgasreinigungssystem eines Verbrennungsmotors mit:
einem NOx-Katalysator (11a, 11b) der Okklusions- und Reduktionsart, der an einem Abgaskanal (5) eines Verbrennungsmotors (1) angeordnet ist, der in dem Abgas enthaltenes NOx aufbereitet und eine NOx-Aufbereitungskapazität durch eine NOx-Reduktionsbehandlung wiedererlangt;
einer Reduktionsmittel-Beigabeeinrichtung (14a, 14b), die an einer stromaufwärtigen Seite des NOx-Katalysators (11a, 11b) der Okklusions- und Reduktionsart an dem Abgaskanal (5) angeordnet ist und ein Reduktionsmittel zu dem Abgas hinzu gibt;
**gekennzeichnet durch**
eine stromaufwärtsseitige Abgasmengen-Einstelleinrichtung (12a, 12b), die stromaufwärtig der Reduktionsmittel-Beigabeeinrichtung (14a, 14b) an der Abgasleitung (5) angeordnet ist und eine Menge des Abgases einstellt, die **durch** einen stromaufwärtigen Bereich des NOx-Katalysators (11a, 11b) der Okklusions- und Verringerungsart strömt; und
eine stromabwärtsseitige Abgasmengen-Einstelleinrichtung (13a, 13b), die stromabwärtig des NOx-Katalysators (11a, 11b) der Okklusions- und Reduktionsart an dem Abgaskanal (5) angeordnet ist und eine Menge des Abgases einstellt, die **durch** einen stromabwärtigen Bereich des NOx-Katalysators (11a, 11b) der Okklusions- und Reduktionsart strömt,
wobei dann, wenn die NOx-Reduktionsbehandlung des NOx-Katalysators (11a, 11b) der Okklusions- und Reduktionsart durchgeführt wird, zumindest die stromabwärtsseitige Abgasmengen-Einstelleinrichtung (13a, 13b) die Menge des Abgases verringert, die **durch** den stromabwärtigen Bereich des NOx-Katalysators (11a, 11b) der Okklusions- und Verringerungsart strömt, und die Reduktionsmittel-Beigabeeinrichtung (14a, 14b) das Reduktionsmittel zu dem Abgas hinzu gibt, und
in einem Zustand, in dem die Menge des Abgases, die durch den stromabwärtigen Bereich des NOx-Katalysators (11a, 11b) der Okklusions- und Verringerungsart strömt, verringert ist und das von der Reduktionsmittel-Beigabeeinrichtung (14a, 14b) hinzu gegebene Reduktionsmittel in dem NOx-Katalysator (11a, 11b) der Okklusions- und Verringerungsart verteilt ist, die stromaufwärtsseitige Abgasmengen-Einstelleinrichtung (12a, 12b) die Menge des Abgases verändert, die **durch** den stromaufwärtigen Bereich des NOx-Katalysators (11a, 11b) der Okklusions- und Reduktionsart strömt.

2. Abgasreinigungssystem eines Verbrennungsmotors gemäß Anspruch 1, wobei in einem Zustand, in dem die Menge des Abgases, die durch den stromabwärtigen Bereich des NOx-Katalysators (11a, 11b) der Okklusions- und Reduktionsart strömt, verringert ist und das von der Reduktionsmittel-Beigabeeinrichtung (14a, 14b) hinzu gegebene Reduktionsmittel in dem NOx-Katalysator (11a, 11b) verteilt ist, die stromaufwärtsseitige Abgasmengen-Einstelleinrichtung (12a, 12b) einen Erhöhungs-/Verringerungs-Vorgang einmal oder mehrmals durchführt oder die Menge des Abgases, die durch den stromaufwärtigen Bereich des NOx-Katalysators (11a, 11b) der Okklusions- und Reduktionsart strömt, vorübergehend erhöht und dann verringert.

3. Abgasreinigungssystem eines Verbrennungsmotors gemäß Anspruch 1 oder 2, das des Weiteren eine Umgehungsleitung (10b, 10a) für das Vorbeileiten des Abgases zu dem NOx-Katalysator (11a, 11b) der Okklusions- und Reduktionsart, der stromaufwärtsseitigen Abgasmengen-Einstelleinrichtung (12a, 12b) und der stromabwärtsseitigen Abgasmengen-Einstelleinrichtung (13a, 13b) besitzt,
wobei dann, wenn die stromaufwärtsseitige Abgasmengen-Einstelleinrichtung (12a, 12b) die Menge des Abgases verringert, die durch den stromaufwärtigen Bereich des NOx-Katalysators (11a, 11b) der Okklusions- und Reduktionsart strömt, und wenn die stromabwärtsseitige Abgasmengen-Einstelleinrichtung (13a, 13b) die Menge des Abgases verringert, die durch stromabwärtigen Bereich des NOx-Katalysators (11a, 11b) der Okklusions- und Reduktionsart strömt, zumindest ein Teil des Abgases durch die Umgehungsleitung (10b, 10a) strömt.

4. Abgasreinigungssystem eines Verbrennungsmotors gemäß Anspruch 1, das des Weiteren eine Druck-Erfassungseinrichtung besitzt, die stromabwärtig des NOx-Katalysators (11a, 11b) der Okklusions- und Reduktionsart angeordnet ist und einen Druck an der stromabwärtigen Seite des NOx-Katalysators (11a, 11b) der Okklusions- und Reduktionsart in der Abgasleitung (5) erfasst,
wobei in einem Zustand, in dem die Menge des Abgases, die durch einen stromabwärtigen Bereich des NOx-Katalysators (11a, 11b) der Okklusions- und Reduktionsart strömt, verringert ist und das von der Reduktionsmittel-Beigabeeinrichtung (14a, 14b) hinzu gegebene Reduktionsmittel in dem NOx-Katalysator (11a, 11b) der Okklusions- und Reduktionsart verteilt wird, wenn der durch die Druck-Erfassungseinrichtung erfasste Druck gleich wie oder höher als ein vorbestimmter Druck ist,
wobei die stromaufwärtsseitige Abgasmengen-Einstelleinrichtung (12a, 12b) die Menge des Abgases verringert, die durch den stromaufwärtigen Bereich des NOx-Katalysators (11a, 11b) der Okklusions- und Reduktionsart strömt.

5. Abgasreinigungssystem eines Verbrennungsmotors gemäß Anspruch 1, das des Weiteren eine Konzentrations-Erfassungseinrichtung besitzt, die stromabwärtig des NOx-Katalysators (11a, 11b) der Okklusions- und Reduktionsart angeordnet ist und eine Konzentration eines vorgegebenen Bestandteils in dem Abgas erfasst, das durch einen stromabwärtigen Bereich des NOx-Katalysators (11a, 11b) der Okklusions- und Reduktionsart strömt,
wobei in einem Zustand, in dem die Menge des Abgases verringert ist, die durch den stromabwärtigen Bereich des NOx-Katalysators (11a, 11b) der Okklusions- und Reduktionsart strömt, und das von der Reduktionsmittel-Beigabeeinrichtung (14a, 14b) hinzu gegebene Reduktionsmittel in dem NOx-Katalysator (11a, 11b) der Okklusions- und Reduktionsart verteilt wird, wenn die Konzentration des vorgegebenen Bestandteils in dem Abgas, die durch die Konzentrations-Erfassungseinrichtung erfasst wird, eine vorbestimmte Konzentration erreicht, die stromaufwärtsseitige Abgasmengen-Einstelleinrichtung (12a, 12b) die Menge des Abgases verringert, die durch den stromaufwärtigen Bereich des NOx-Katalysators (11a, 11b) der Okklusions- und Reduktionsart strömt.

6. Abgasreinigungssystem eines Verbrennungsmotors gemäß Anspruch 3, das des Weiteren eine Umgehungsleitungs-Abgasmengen-Einstelleinrichtung (12b, 13b, 12a, 13a) besitzt, die in der Umgehungsleitung (10b, 10a) vorgesehen ist und eine Menge des Abgases einstellt, die durch die Umgehungsleitung (10b, 10a) strömt,
wobei in einem Zustand, in dem die Menge des Abgases, die durch den stromabwärtigen Bereich des NOx-Katalysators (11a, 11b) der Okklusions- und Reduktionsart strömt, verringert ist und das von der Reduktionsmittel-Beigabeeinrichtung (14a, 14b) hinzu gegebene Reduktionsmittel in dem NOx-Katalysator (11a, 11b) der Okklusions- und Reduktionsart verteilt ist, wobei die stromaufwärtsseitige Abgasmengen-Einstelleinrichtung (12a, 12b) die Menge des Abgases verändert, die durch den stromaufwärtigen Bereich des NOx-Katalysators (11a, 11b) der Okklusions- und Reduktionsart strömt, und die Umgehungsleitungs-Abgasmengen-Einstelleinrichtung (12b, 13b, 12a, 13a) die Menge des Abgases einstellt, die durch die Umgehungsleitung (10b, 10a) strömt.

## Revendications

1. Système de purification de gaz d'échappement d'un moteur à combustion interne, comprenant :
un catalyseur de NOx du type à réduction d'occlusion (11a, 11b) disposé sur un chemin d'échappement (5) d'un moteur à combustion interne (1), purifiant des NOx dans le gaz d'échappement, et récupérant une capacité de purification de NOx par un traitement de réduction de NOx ;
un moyen d'ajout d'agent réducteur (14a, 14b) disposé sur un côté amont dudit catalyseur de NOx du type à réduction d'occlusion (11a, 11b) sur le chemin d'échappement (5) et ajoutant un agent réducteur dans le gaz d'échappement ;
**caractérisé par**
une moyen d'ajustement de quantité d'échappement côté amont (12a, 12b) disposé en amont dudit moyen d'ajout d'agent réducteur (14a, 14b) sur le chemin d'échappement (5), et ajustant une quantité du gaz d'échappement s'écoulant à travers l'amont dudit catalyseur de NOx du type à réduction d'occlusion (11a, 11b) ; et
un moyen d'ajustement de quantité d'échappement côté aval (13a, 13b) disposé en aval dudit catalyseur de NOx du type à réduction d'occlusion (11a, 11b) sur le chemin d'échappement (5), et ajustant une quantité du gaz d'échappement s'écoulant à travers l'aval dudit catalyseur NOₓ de type à réduction d'occlusion (11a, 11b),
dans lequel en exécutant le traitement de réduction de NOx dudit catalyseur de NOx du type à réduction d'occlusion (11a, 11b), au moins ledit moyen d'ajustement de quantité d'échappement côté aval (13a, 13b) diminue la quantité du gaz d'échappement s'écoulant à travers l'aval dudit catalyseur de NOx du type à réduction d'occlusion (11a, 11b), et ledit moyen d'ajout d'agent réducteur (14a, 14b) ajoute l'agent réducteur dans le gaz d'échappement, et
dans un état où la quantité du gaz d'échappement s'écoulant à travers l'aval dudit catalyseur de NOx du type à réduction d'occlusion (11a, 11b) est diminuée et que l'agent réducteur ajouté à partir dudit moyen d'ajout d'agent réducteur (14a, 14b) étant dispersé dans ledit catalyseur de NOx du type à réduction d'occlusion (11a, 11b), ledit moyen d'ajustement de quantité d'échappement côté amont (12a, 12b) change la quantité du gaz d'échappement s'écoulant à travers l'amont dudit catalyseur de NOx du type à réduction d'occlusion (11a, 11b).

2. Système de purification de gaz d'échappement d'un moteur à combustion interne selon la revendication 1, dans lequel dans un état où la quantité du gaz d'échappement s'écoulant à travers l'aval dudit catalyseur de NOx du type à réduction d'occlusion (11a, 11b) est diminuée et que l'agent réducteur ajouté à partir dudit moyen d'ajout d'agent réducteur (14a, 14b) étant dispersé dans ledit catalyseur de NOx du type à réduction d'occlusion (11a, 11b), ledit moyen d'ajustement de quantité d'échappement côté amont (12a, 12b) exécute une opération d'augmentation/de diminution, une fois ou plus, ou augmentant temporairement et diminuant ensuite la quantité du gaz d'échappement s'écoulant à travers l'amont dudit catalyseur de NOx du type à réduction d'occlusion (11a, 11b).

3. Système de purification de gaz s'échappement d'un moteur à combustion interne selon la revendication 1 ou 2, comprenant en plus un chemin secondaire (10b, 10a) pour contourner le gaz d'échappement audit catalyseur de NOx du type à réduction d'occlusion (11a, 11b), le moyen d'ajustement de quantité d'échappement côté amont (12a, 12b), et le moyen d'ajustement de quantité d'échappement côté aval (13a, 13b),
dans lequel ledit moyen d'ajustement de quantité d'échappement côté amont (12a, 12b) diminue la quantité du gaz d'échappement s'écoulant à travers l'amont dudit catalyseur de NOx du type à réduction d'occlusion (11a, 11b) et lorsque ledit moyen d'ajustement de quantité d'échappement côté aval (13a, 13b) diminue la quantité du gaz d'échappement s'écoulant à travers l'aval dudit catalyseur de NOx du type à réduction d'occlusion (11a, 11b), au moins une partie du gaz d'échappement s'écoule à travers ledit chemin secondaire (10b, 10a).

4. Système de purification de gaz s'échappement d'un moteur à combustion interne selon la revendication 1, comprenant en plus un moyen de détection de pression disposé en aval dudit catalyseur de NOx du type à réduction d'occlusion (11a, 11b) et détectant une pression, sur le côté aval dudit catalyseur de NOx du type à réduction d'occlusion (11a, 11b), dans le chemin d'échappement (5),
dans lequel dans un état où la quantité du gaz d'échappement s'écoulant à travers l'aval dudit catalyseur de NOx du type à réduction d'occlusion (11a, 11b), est diminuée et l'agent réducteur ajouté à partir dudit moyen d'ajout d'agent réducteur (14a, 14b) étant dispersé dans ledit catalyseur de NOx du type à réduction d'occlusion (11a, 11b), si la pression détectée par ledit moyen de détection de pression est égale à ou plus grande qu'une pression prédéterminée, ledit moyen d'ajustement de quantité d'échappement côté amont (12a, 12b) diminue la quantité du gaz d'échappement s'écoulant à travers l'amont dudit catalyseur de NOx du type à réduction d'occlusion (11a, 11b).

5. Système de purification de gaz d'échappement d'un moteur à combustion interne selon la revendication 1, comprenant en plus un moyen de détection de concentration disposé en aval dudit catalyseur de NOx du type à réduction d'occlusion (11a, 11b) et détectant une concentration d'un composant spécifié dans le gaz d'échappement s'écoulant à travers l'aval dudit catalyseur de NOx du type à réduction d'occlusion (11a, 11b),
dans lequel dans un état où la quantité du gaz d'échappement s'écoulant à travers l'aval dudit catalyseur de NOx du type à réduction d'occlusion (11a, 11b) est diminuée et l'agent réducteur ajouté à partir dudit moyen d'ajout d'agent réducteur (14a, 14b) étant dispersé dans ledit catalyseur de NOx du type à réduction d'occlusion (11a, 11b), si la concentration du composant spécifié dans le gaz d'échappement qui est détectée par ledit moyen de détection de concentration atteint une concentration prédéterminée, ledit moyen d'ajustement de quantité d'échappement côté amont (12a, 12b) diminue la quantité du gaz d'échappement s'écoulant à travers l'amont dudit catalyseur de NOx du type à réduction d'occlusion (11a, 11b).

6. Système de purification de gaz s'échappement d'un moteur à combustion interne selon la revendication 3, comprenant en plus un moyen d'ajustement de quantité d'échappement de chemin secondaire (12b, 13b, 12a, 13a) pourvu dans ledit chemin secondaire (10b, 10a) et ajustant une quantité du gaz d'échappement s'écoulant à travers ledit chemin secondaire (10b, 10a),
dans lequel dans un état où la quantité du gaz d'échappement s'écoulant à travers l'aval dudit catalyseur de NOx du type à réduction d'occlusion (11a, 11b) est diminuée et l'agent réducteur ajouté à partir dudit moyen d'ajout d'agent réducteur (14a, 14b) étant dispersé dans ledit catalyseur de NOx du type à réduction d'occlusion (11a, 11b), ledit moyen d'ajustement de quantité d'échappement côté amont (12a, 12b) change la quantité du gaz d'échappement s'écoulant à travers l'amont dudit catalyseur de NOx du type à réduction d'occlusion (11a, 11b), et ledit moyen d'ajustement de quantité d'échappement de chemin secondaire (12b, 13b, 12a, 13a) change la quantité du gaz d'échappement s'écoulant à travers ledit chemin secondaire (10b, 10a).
